(19) Europäisches Patentamt
European Patent Office
Office européen des brevets

(11) **EP 1 777 868 A1**

(12) **EUROPEAN PATENT APPLICATION**

(43) Date of publication:
**25.04.2007 Bulletin 2007/17**

(51) Int Cl.:
**H04L 1/18** (2006.01)     **H04L 1/02** (2006.01)

(21) Application number: **06250616.7**

(22) Date of filing: **03.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.10.2005 JP 2005308887**

(71) Applicant: **FUJITSU LIMITED**
**Kawasaki-shi,**
**Kanagawa 211-8588 (JP)**

(72) Inventor: **Seki, Hiroyuki,**
**c/o Fujitsu Limited**
**Kawasaki-shi,**
**Kanagawa 211-8588 (JP)**

(74) Representative: **Hitching, Peter Matthew et al**
**Haseltine Lake**
**Lincoln House**
**300 High Holborn**
**London WC1V 7JH (GB)**

(54) **Channel estimation based retransmission method, system, receiver apparatus and transmitter apparatus**

(57)     There are provided: a channel estimation means (23) which obtains channel estimation values hij [j = 1, 2] between the transmitter antennas and the receiver antennas 21-i [i = 1, 2] from received signals received by the receiver antennas (21-i); a memory (24) for storing therein the reception signals yi and the channel estimation values hij obtained by said channel estimation means (23); and a signal reproducing and separating means (25) which reproduces and separates the signals transmitted from the transmitter antennas 15-i of the transmitter apparatus 1 based on [i] a retransmission signal for a reception signal from the transmitter apparatus (1), [ii] channel estimation values obtained with respect to the retransmission signal by the channel estimation means (23), and [iii] the reception signals yi and the channel estimation values hij held in the memory (24). With this arrangement, in MIMO transmission, MIMO signal separation processing is effectively performed even when correlation between the transmitter antenna 15-i and the receiver antenna (21-i) is high. It is also possible to realize sufficient characteristics improvement in retransmission combination.

FIG. 2

EP 1 777 868 A1

**Description**

## CROSS REFERENCE TO RELATED APPLICATIONS

This application is based on and hereby claims priority to Japanese Application No. 2005-308887 filed on October 24, 2005 in Japan, the contents of which are hereby incorporated by reference.

## BACKGROUND OF THE INVENTION

(1) Field of the Invention

The present invention relates to a radio communication method, a radio communication system, a receiver apparatus and a transmitter apparatus. The invention relates particularly to Multiple-Input Multiple-Output radio communication technology in which signal transmission is performed using two or more transmitter and receiver antennas.

(2) Description of the Related Art

Recently, as technology making possible a large volume (high-speed) of data communication by efficiently using frequency bands, MIMO (Multiple-Input Multiple-Output) attracts a great deal of attention. MIMO uses multiple antennas on the transmitter and the receiver end. Independent data streams are transmitted from the multiple antennas of the transmitter. From signals received by each receiver antenna of the receiver, multiple transmission signals (data streams), which are mixed over propagation paths, are separated using propagation path (channel) estimation values, whereby transmission rate is improved without enlarging the frequency band.

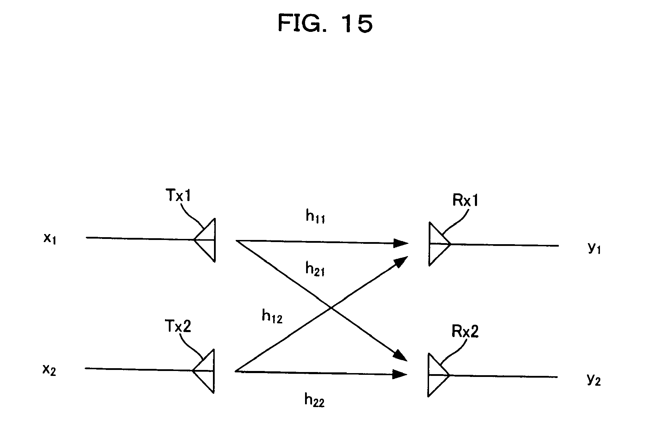

For example, FIG. 15 shows a construction of a MIMO communication system in which two transmitter antennas and two receiver antennas are provided. In FIG. 15, xj (j = 1, 2) designates transmission signals for each transmitter antenna Txj; yi (i = 1, 2) designates reception signals for each receiver antenna Rxi; hij designates channels between the transmitter antenna Txj and the receiver antenna Rxi.

That is, in this case, a transmission signal $x_1$ sent from an antenna Tx1 is received by the receiver antennas Rx1 and Rx2 through channels $h_{11}$ and $h_{21}$. On the other hand, a transmission signal $x_2$ sent from an antenna Tx2 is received by the receiver antennas Rx1 and Rx2 through channels $h_{12}$ and $h_{22}$. Therefore, a relationship indicated by the following formula (1) is established between a transmission vector X ($x_1$, $x_2$) and a reception signal vector Y ($y_1$, $y_2$).

$$Y = \begin{pmatrix} y_1 \\ y_2 \end{pmatrix} = \begin{pmatrix} h_{11} & h_{12} \\ h_{21} & h_{22} \end{pmatrix} \begin{pmatrix} x_1 \\ x_2 \end{pmatrix} = HX \qquad (1)$$

In this formula (1), the matrix $H$ formed by $h_{11}$, $h_{12}$, $h_{21}$, and $h_{22}$ is called a channel matrix. Here, effects of noise components are ignored.

There are several methods for MIMO signal separation performed on the receiver end, such as a method in which an inverse matrix of a channel correlation matrix is used, and a method in which MLD (Maximum Likelihood Detection) algorithm is used. In the following, a description will be made of a case in which an inverse matrix of a channel correlation matrix is used. Now, a channel correlation matrix R and a correlation vector Z are defined by the following formulas (2) and (3).

$$R = H^{\bullet} H \qquad (2)$$

$$Z = H^{\bullet} Y \qquad (3)$$

In these formula (2) and (3), H* means the complex conjugate transpose of the channel matrix $H$. From the above formulas (1) through (3), the following formulas (4) and (5) are established.

$$Z = RX \qquad\qquad (4)$$

$$X = R^{-1}Z \qquad\qquad (5)$$

In this manner, by means of multiplying the correlation vector $Z$ by the inverse matrix $R^{-1}$ of the channel correlation matrix $R$, it is possible to reproduce the transmission signal vector $X$.

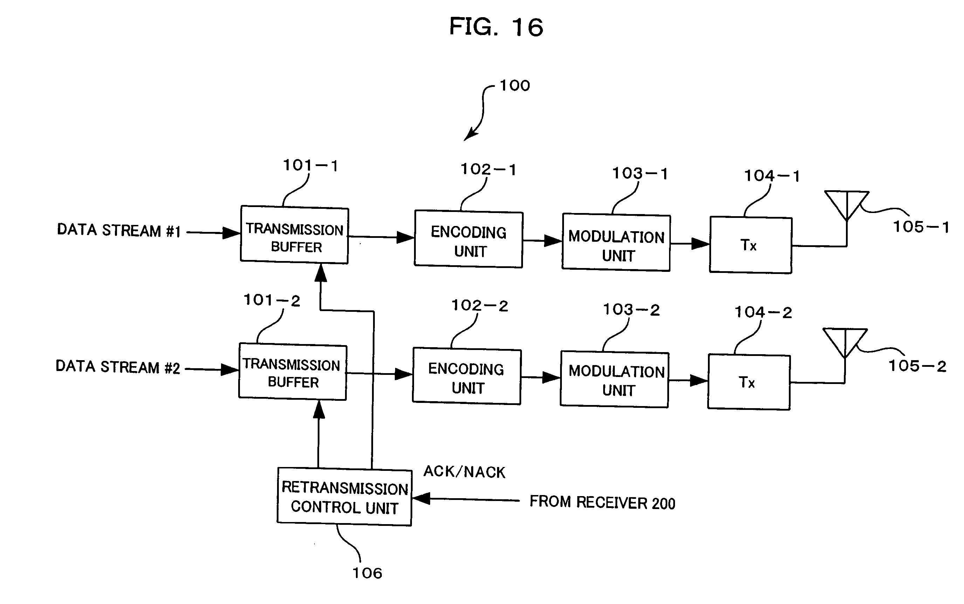

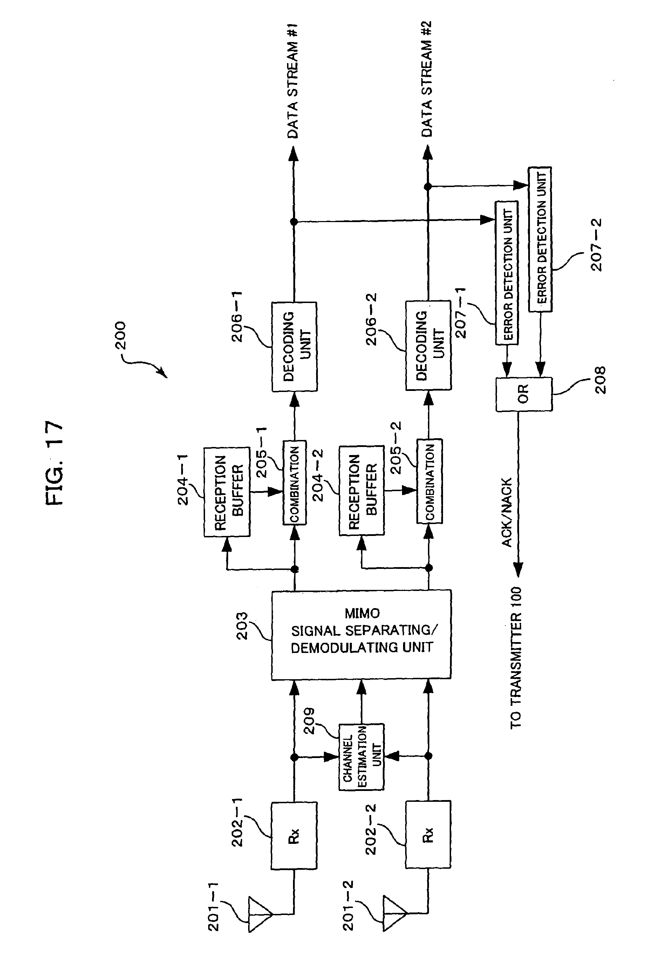

Next, referring to FIG. 16 and FIG. 17, a description will be made of a construction of a previous MIMO communication system. The following description will be made on a case where two transmitter antennas and two receiver antennas are provided.

FIG. 16 is a block diagram showing a construction of a MIMO transmitter in the previous MIMO communication system; FIG. 17 is a block diagram showing a construction of aMIMO receiver in the previous MIMO communication system. The MIMO transmitter 100 of FIG. 16 includes: two transmitter antennas 105-1 and 105-2; transmission buffers 101-1 and 101-2, encoding units 102-1 and 102-2, modulation unit 103-1 and 103-2, and radio transmitter unit (Tx) 104-1 and 104-2, provided, one for each of the transmitter antennas 105-1 and 105-2; a retransmission control unit 106. The MIMO receiver 200 of FIG. 17 includes: two receiver antennas 201-1 and 201-2; radio receiver units (Rx) 202-1 and 202-2, reception buffers 204-1 and 204-2, combining units 205-1 and 205-2, decoding units 206-1 and 206-2, and error detection units 207-1 and 207-2, provided one for each of the receiver antennas 201-1 and 201-2; a MIMO signal separating and demodulating unit 203; an OR operation unit 208; and a channel estimation unit 209.

Here, in the MIMO transmitter 100 of FIG. 16, the transmission buffer 101-i (i = 1, 2) temporarily holds transmission data (data stream #i) in preparation for retransmission control. The encoding unit 102-i performs specified error correction encoding, such as turbo encoding, onto transmission data from the transmission buffer 101-i. The modulation unit 103-i performs modulation by mapping a bit sent from the encoding unit 102-i into symbols having signal points such as QPSK (Quadrature Phase Shift Keying) or 16QAM (Quadrature Amplitude Modulation). In this instance, the modulation unit 103-i performs multiplexing processing not only of data symbols but also of pilot symbols for use in channel estimation and control symbols which transmit control information.

The radio transmitter unit 104-i converts (up-converts) a modulation signal (baseband signal) from the modulation unit 103-i into a radio (RF) signal, which is then radiated from the transmitter antenna 105-i.

The retransmission control unit 106 performs control such that retransmission data is output from the transmission buffer 101-i with specified timing based on ACK/NACK signal from the MIMO receiver 200.

On the other hand, on the MIMO receiver 200 of FIG. 17, the receiver antenna 201-i receives RF signals sent from the MIMO transmitter 100. The radio receiver unit 202-i converts (down-converts) the RF signals received by the receiver antenna 201-i into baseband signals. The channel estimation unit 209 calculates channel estimation values (channel matrix) between the transmitter antenna 105-i and the receiver antenna 201-i using pilot symbols multiplexed on the received signals.

The MIMO signal separating and demodulating unit 203 separates data stream #i multiplexed for each transmission antenna 105-i based on the channel estimation values (channel matrix) obtained by the channel estimation unit 209 by using the method in which the inverse matrix of the channel correlation matrix is used or the method in which the MLD algorithm is used, as described above, and generates demodulation data.

The reception buffer 204-i temporarily holds the above demodulation data. The combining unit 205-i combines ("retransmission combination", which will be detailed later) the previous demodulation data with the demodulation data at the time of retransmission. The decoding unit 206-i performs error correction decoding, such as turbo decoding, on the decoded data which has been subjected to the retransmission combination.

The error detection unit 207-i detects errors in the results of the above correction decoding. If no error is detected in demodulated data by means of the error detection unit 207-i, it means that the demodulated data is correctly reproduced as data stream #i.

The OR operation unit 208 performs an OR operation on the error detection result obtained by each error detection unit 207-i. If an error is detected in any data stream #i, the OR operation unit 208 outputs a NACK signal. If no error is detected in either data stream #i, the OR operation unit 208 outputs an ACK signal. These ACK/NACK signals are sent to the MIMO transmitter 100 through a non-illustrated radio transmitter unit.

In the previous MIMO communication system with the above construction, on the MIMO transmitter 100, the transmission data stream #i is temporarily held in the transmission buffer 101-i in preparation for retransmission control. After that, the data stream #i is subjected to error correction encoding performed by the encoding unit 102-i, and is then modulated by the modulation unit 103-i with desired modulation processing such as QPSK or 16 QAM. At this time, the modulation unit 103-i also multiplexes pilot symbols and control symbols.

Then, the modulated signal obtained by the modulation unit 103-i is up-converted into an RF signal by means of the radio transmitter unit 104-i, and is then sent from the transmitter antenna 105-i to the MIMO receiver 200.

On the MIMO receiver 200, each receiver antenna 201-i receives the above RF signals. The radio receiver unit 202-i down-converts the received RF signals into baseband signals, which are then input to the MIMO signal separating and demodulating unit 203. The MIMO signal separating and demodulating unit 203 separates multiplexed data streams #i for each transmitter antenna 105-i, and generates demodulation data.

The demodulated data is temporarily held in the reception buffer 204-i for combination, and is then combined, by means of the combining unit 205-i, with demodulated data obtained at the time of retransmission (such combination is hereinafter called "retransmission combination"). The demodulated data having been retransmission-combined is subjected to error correction encoding by the decoding unit 206-i. Here, if no error is detected by the error detection unit 207-i, it means that the data is reproduced as data stream #i. The error detection result is subjected to an OR operation by the OR operation unit 208 with respect to two streams. If an error is detected in any data steam #i, a NACK signal is generated and sent to the MIMO transmitter 100. If no error is detected in either data stream #i, an ACK signal is generated and sent to the MIMO transmitter 100.

In the MIMO transmitter 100, the ACK/NACK signals are demodulated by a non-illustrated radio receiver unit, and notified to a retransmission control unit 106, which performs control such that retransmission data is output from the transmission buffer 101-i with specified timing.

In this manner, in the previous example, retransmission combination is carried out by using modulation data in the reception buffer 204-i, which data has already been subjected to MIMO signal separation performed by the MIMO signal separating and demodulating unit 203.

Here, as with previous technology relating to MIMO, there are arts proposed in the following patent documents 1 through 3.

(1) The art of the following patent document 1 aims at increasing diversity gain at the time of data retransmission, even when change in propagation path environment of radio signals is moderate over time. For this purpose, when multiple data streams are concurrently transmitted by radio using multiple transmission systems, at the time of retransmission of a data stream, weight multiplied to a transmission signal is different from that which is used at the previous transmission. Alternatively, transmission timing of a transmission signal is different from that which is used at the previous transmission. In this manner, propagation path environment is made to be different from that at the previous transmission on purpose. As a result, it becomes possible to decrease fading correlation at the time of retransmission.

In addition, as shown in FIG. 2 of the patent document 1, on the receiver end, retransmission combination processing based on retransmission control (combination of the reception signal at the previous transmission held in the buffers 154-1 and 154-2 with the reception signal at the time of retransmission) such as HARQ (Hybrid Automatic Repeat Request) is carried out after MIMO signal separation. Here, HARQ is technology for improving error correction performance at the time of retransmission by combining ARQ and error correction codes (FEC: Forward Error Correction), and the technology reduces the number of times of retransmission performed. The technology includes two types.

One of the two types is a type in which data is generated by combining a reception signal at the previous transmission with a reception signal at the time of retransmission. The other is a type in which a puncturing pattern of data after being encoded at the time of retransmission is changed, thereby transmitting bits which were not transmitted previously. By applying combination, the equivalent encoding rate is lowered, whereby error correction performance (encoding gain) is improved. The latter technology is called IR (Incremental Redundacy), and is the technology standardized as specification of HSDPA (High Speed Downlink Packet Access) in 3GPP (registered trademark) (see the following non-patent document 2).

(2) The technology of the following patent document 2 aims at improving error rate characteristics of received data while maintaining the frequency use efficiency, when different data is transmitted from multiple antennas. For this purpose, diffusion units are provided, one for each of the multiple transmission systems. Thus, it becomes possible to use different diffusion methods (diffusion rate, the number of diffusion codes in use, and the number of diffusion codes assigned to each user) for different transmission systems. As a result, by increasing the diffusion rate of a transmission system whose circuit quality (propagation path environment) is poor, it becomes possible to improve the circuit quality.

(3) The technology of the following patent document 3 aims at improving reception quality by controlling the transmission parameters, such as a modulation method, paying consideration to the relative relationships among channels. For this purpose, in a radio communication system in which multiple antennas are used on the transmitter end and on the receiver end, the above transmission parameters are controlled based on the reception electric field strength of the whole system and on the effective reception electric field strength.

Further, as other communication technology using multiple antennas, there is technology called STTD (Space Time Transmit Diversity). This STTD is technology in which two antennas are used for transmission, and is described, for example, in the following non-patent document 1.

[Patent Document 1] Japanese Patent Application Laid-open No. 2004-112098
[Patent Document 2] Japanese Patent Application Laid-open No. 2004-166038
[Patent Document 3] Japanese Patent Application Laid-open No. 2004-304760
[Non-patent Document 1] 3rd Generation Partnership Project; Technical Specification Group Radio Access Network; Physical channels and mapping of transport channels onto physical channels (FDD) (Release 5) (3GPP TS 25.211 V5.6.0 (2004-09))
[Non-patent Document 2] 3rd Generation Partnership Project; Technical Specification Group Radio Access Network; Multiplexing and channel coding (FDD)(Release 5)(3GPP TS 25.212 V5.9.0 (2004-06)).

MIMO transmission is predicated on a condition where propagation paths (channels) between antennas have low correlation thereamong. However, correlation among antennas does not depend only on antenna placement, it also significantly depends on propagation environment. For example, in a line-of-sight transmission environment, correlation among antennas is high, so that signal separation cannot be well performed by the previous MIMO signal separation method, and errors occur in demodulated data.

For example, in FIG. 15, when correlation between the receiver antennas Rxi is high, correlation between $h_{11}$ and $h_{21}$, and between $h_{12}$ and $h_{22}$ becomes high in the above formula (1). In contrast, when correlation between the transmitter antennas Txj is high, correlation between $h_{11}$ and $h_{12}$, and between $h_{21}$ and $h_{22}$ becomes high. In these cases, even if the transmission signal vector is reproduced by the above formula (5), demodulation characteristics are significantly deteriorated due to interference between data streams.

When any error occurs in the demodulated signal, signal retransmission and combination are performed under retransmission control such as the above-described HARQ. However, a propagation path environment is not changed in a short time. Thus, the probability that correlation among antennas is still high. Under such an environment, the previous retransmission combination processing cannot improve the transmission error rate.

Thus, in the previous retransmission combination using MIMO transmission, the transmission signal vector $X(t_1)$ obtained by the above formula (5) from the signal sent at a time $t_1$ is combined (added) with the transmission signal vector $X(t_2)$ obtained by the above formula (5) from the signal sent at a time $t_2$, as shown in the following formula (6):

$$X(t_1) + X(t_2) \qquad\qquad (6)$$

Normally, due to effects of fading in mobile communication, fading correlation between the time $t_1$ and the time $t_2$ becomes small, so that diversity gain due to retransmission combination can be expected. However, when correlation among antennas is high, retransmission combination cannot eliminate interference between data streams caused when $X(t_1)$ and $X(t_2)$ are demodulated (MIMO signal separation), so that demodulation characteristics after retransmission combination are difficult to improve.

The above patent document 1, as already described, proposes a method in which weight of transmitter antennas at the time of retransmission is changed, thereby performing control so that fading correlation at the time of retransmission becomes small. This method, however, has the following disadvantages. It is difficult to control the optimum weight. Under a condition where the correlation among antennas is high, such as line-of-sight propagation environment, sufficient effect in lowering the correlation among antennas cannot be obtained. Further, in the technology of the above patent document 1, retransmission combination processing is performed after MIMO signal separation. Thus, when antenna correlation is high, interference between data streams in MIMO signal separation remains. Here, the above patent documents 2 and 3 do not describe anything about the retransmission combination processing based on retransmission control.

## SUMMARY OF THE INVENTION

With the foregoing problems in view, one object of the present invention is to realize effective functioning of MIMO signal separation in MIMO transmission, in which two or more antennas are used on the transmitter and receiver ends, even when correlation between transmitter antennas and receiver antennas is high. Further, another object of the invention is to make it possible to realize sufficient characteristics improvement in retransmission combination.

In order to accomplish the above object, according to the present invention, the present invention is characterized by the following radio communication method, radio communication system, receiver apparatus, and transmitter apparatus.

(1) As a generic feature, there is provided a radio communication method for radio communication carried out between a transmitter apparatus having a plurality of transmitter antennas and a receiver apparatus having a plurality of receiver antennas, the method comprising: on the transmitter apparatus, transmitting signals from the plurality of transmitter antennas of the transmitter apparatus, and on the receiver apparatus, receiving the signals, sent from the transmitter apparatus, through the plurality of receiving antennas, and obtaining channel estimation values between the transmitter antennas and the receiver antennas from the reception signals, and holding the channel estimation values and the reception signals; and reproducing and separating the signals transmitted from the transmitter antennas of the transmitter apparatus based on (*i*) a retransmission signal for a reception signal from the transmitter apparatus, (*ii*) channel estimation values obtained with respect to the retransmission signal, and (iii) the reception signals and the channel estimation values held in the receiver apparatus.

(2) As another generic feature, there is provided a radio communication method for radio communication carried out between a transmitter apparatus having a plurality of transmitter antennas and a receiver apparatus having a plurality of receiver antennas, the method comprising: on the transmitter apparatus, transmitting signals from the transmitter antennas using individual carriers whose frequencies are separate from one another or using multiple symbols which are separate from one another at least in time, and on the receiver apparatus receiving the signals transmitted from the transmitter apparatus through the receiver antennas, and obtaining channel estimation values for the multiple carriers or symbols from the reception signal, reproducing and separating the signals, transmitted from the transmitter antennas of the transmitter apparatus, based on the reception signals and the channel estimation values for the multiple carriers or symbols.

(3) As yet another generic feature, there is provided a receiver apparatus for use in a radio communication system in which radio communication is carried out between a transmitter apparatus having a plurality of transmitter antennas and a receiver apparatus having a plurality of receiver antennas, the receiver apparatus comprising: a channel estimation means which obtains channel estimation values between the plurality of transmitter antennas and the plurality of receiver antennas from received signals received by the receiver antennas from the transmitter apparatus; a first memory for storing therein the reception signals and the channel estimation values obtained by the channel estimation means; and a first signal reproducing and separating means which reproduces and separates the signals transmitted from the transmitter antennas of the transmitter apparatus based on (*i*) a retransmission signal for a reception signal from the transmitter apparatus, (*ii*) channel estimation values obtained with respect to the retransmission signal by the channel estimation means, and (*iii*) the reception signals and the channel estimation values held in the first memory.

(4) As a preferred feature, the receiver apparatus further comprises: a condition detecting means which detects a specified condition relating to the reception signals; a second signal reproduction means which reproduces and separates, if the condition detecting means detects the specified condition, the signals transmitted from the transmitter apparatus based on the reception signals received through the receiver antennas and the channel estimation values obtained with respect to the reception signals by the channel estimation means; a second memory which stores therein the signals obtained by the first signal reproducing and separating means; a reproducing and combining means which combines the signals that are obtained by the second signal reproducing and separating means with respect to the retransmission signal transmitted from the transmitter apparatus for a reception signal with the signals stored in the second memory.

(5) As another preferred feature, the condition detecting means is provided as a number-of-times-of-retransmission detecting means which detects a fact that the number of times of transmission exceeds a specified number of times, as the specified condition.

(6) As yet another preferred feature, the condition detecting means is provided as a correlation value detecting means which detects a fact that correlation of the channel estimation values, obtained by the channel estimation means, is smaller than a specified threshold value.

(7) As further preferred feature, the receiver apparatus further comprises a puncturing pattern changing request means which requests, if the condition detecting means detects the specified condition, the transmitter apparatus to transmit the retransmission signal after changing a puncturing pattern thereof.

(8) As another generic feature, there is provided a radio communication system in which communication carried out between a transmitter apparatus having a plurality of transmitter antennas and a receiver apparatus having a plurality of receiver antennas, wherein the transmitter apparatus includes: a transmitter means, provided, one for each of the transmitter antennas for transmitting a single signal, the transmitter apparatus transmitting signals from the transmitter antennas using individual carriers whose frequencies are separate from one another or using multiple symbols which are separate from one another at least in time, and wherein the receiver apparatus includes: a channel estimation means which receives the signals transmitted from the transmitter apparatus through the receiver antennas, and obtains channel estimation values for the multiple carriers or symbols from the reception signal; and a signal reproducing and separating means which reproduces and separates the signals, transmitted from the transmitter antennas of the transmitter apparatus, based on the reception signals and the channel estimation values obtained by the channel estimation means.

(9) As yet another generic feature, there is provided a transmitter apparatus which carries out radio communication with a receiver apparatus having a plurality of receiver antennas, the transmitter apparatus comprising: a plurality of transmitter antennas; and a transmitter means, provided, one for each of the transmitter antennas for transmitting a single signal, the transmitter apparatus transmitting signals from the transmitter antennas using individual carriers whose frequencies are separate from one another or using multiple symbols which are separate from one another at least in time.

(10) As a further generic feature, there is provided a receiver apparatus which carries out radio communication with a transmitter apparatus having a plurality of transmitter antennas, the receiver apparatus comprising: a plurality of receiver antennas; a channel estimation means which receives the signals transmitted from the transmitter apparatus, which transmits signals using individual carriers whose frequencies are separate from one another or using multiple symbols which are separate from one another at least in time, through the receiver antennas, and obtains channel estimation values for the multiple carriers or symbols from the reception signal; a signal reproducing and separating means which reproduces and separates the signals, transmitted from the transmitter antennas of the transmitter apparatus, based on the reception signals and the channel estimation values obtained by the channel estimation means.

The present invention guarantees the following advantageous results.

(1) In comparison with the previous case in which retransmission combination is performed after signal separation, signal separation and reproduction processing is more effectively carried out even when antenna correlation is high, so that sufficient characteristics improvement is realized. Accordingly, it becomes possible to improve the efficiency of retransmission control, thereby improving throughput in data communication .

(2) Even when retransmission control is not carried out, similar effects to those which are described above are realized by using carriers whose frequencies are separate from one another in the frequency direction, the carriers revealing low correlation thereamong, or by using multiple symbols which are separate from one another in the time direction, the symbols revealing low correlation thereamong.

Other objects and further features of the present invention will be apparent from the following detailed description when read in conjunction with the accompanying drawings.

## BRIEF DESCRIPTION OF THE DRAWINGS

FIG. 1 is a block diagram showing a construction of a MIMO transmitter constituting a MIMO communication system according to a first preferred embodiment of the present invention;
FIG. 2 is a block diagram showing a construction of a MIMO receiver constituting a MIMO communication system according to the first preferred embodiment of the present invention;
FIG. 3 is a diagram showing an example of a simulation result for describing reception characteristics of the MIMO communication system of the first embodiment in comparison with the previous art;
FIG. 4 is a block diagram showing a construction of a MIMO transmitter constituting a MIMO communication system according to a second preferred embodiment of the present invention;
FIG. 5 is a block diagram showing a construction of a MIMO receiver constituting a MIMO communication system according to the second preferred embodiment of the present invention;
FIG. 6 is a block diagram showing a modified example of a MIMO receiver of FIG. 5;
FIG. 7 is a block diagram showing a construction of a MIMO transmitter constituting a MIMO communication system according to a third preferred embodiment of the present invention;
FIG. 8 is a block diagram showing a construction of a MIMO transmitter constituting a MIMO communication system according to a fourth preferred embodiment of the present invention;
FIG. 9 is a block diagram showing a construction of a MIMO receiver constituting a MIMO communication system according to the fourth preferred embodiment of the present invention;
FIG. 10 is a block diagram showing a construction of a MIMO transmitter constituting a MIMO communication system according to a fifth preferred embodiment of the present invention;

FIG. 11 is a block diagram showing a construction of a MIMO receiver constituting a MIMO communication system according to the fifth preferred embodiment of the present invention;

FIG. 12 is a block diagram showing a construction of a MIMO transmitter constituting a MIMO communication system according to a sixth preferred embodiment of the present invention;

FIG. 13 is a block diagram showing a construction of a MIMO receiver constituting a MIMO communication system according to the sixth preferred embodiment of the present invention;

FIG. 14 is a diagram showing an example of a frame construction of a signal according to the sixth preferred embodiment;

FIG. 15 is a block diagram for describing a previous MIMO communication system;

FIG. 16 is a block diagram showing a construction of a MIMO transmitter in the previous MIMO communication system; and

FIG. 17 is a block diagram showing a construction of a MIMO receiver in the previous MIMO communication system.

## DESCRIPTION OF THE PREFERRED EMBODIMENT(S)

In the following embodiments, it will be suggested that when correlation between antennas is high, retransmission combination be carried out before MIMO signal separation, not after the MIMO signal separation as shown in the above formula. Further, methods will be suggested in which multiple carriers that are separate from one another in the frequency direction or multiple symbols that are separate from one another in the time direction are used for realizing like effects even in cases where retransmission control is not performed.

[A] First Embodiment

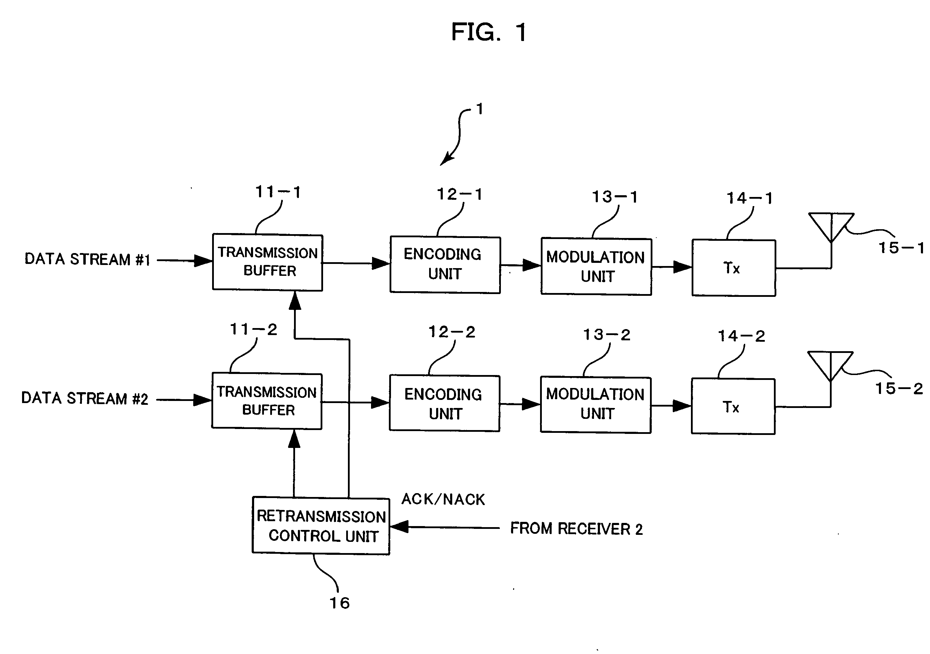

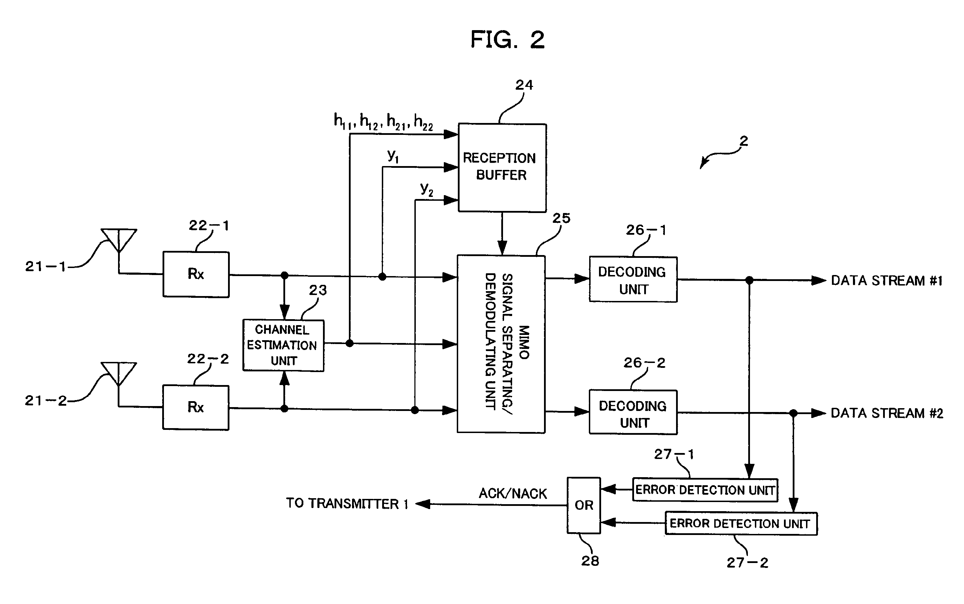

FIG. 1 and FIG. 2 are block diagrams showing constructions of a MIMO transmitter and a MIMO receiver, respectively, constituting a MIMO communication system according to a first preferred embodiment of the present invention. The MIMO transmitter (transmitter apparatus) 1 of FIG. 1 is similar to the previous MIMO transmitter 100, which has already been described referring to FIG. 16. The MIMO transmitter 1 includes: two antennas 15-1 and 15-2; transmission buffers 11-1 and 11-2, encoding units 12-1 and 12-2, modulation units 13-1 and 13-2, and radio transmission units (Tx) 14-1 and 14-2, provided, one for each of the two transmitter antennas 15-1 and 15-2; and a retransmission control unit 16. The MIMO receiver (receiver apparatus) 2 of FIG. 2 includes: two receiver antennas 21-1 and 21-2; radio receiver units (Rx) 22-1 and 22-2, decoding units 26-1 and 26-2, and error detecting units 27-1 and 27-2, provided, one for each of the two receiver antennas 21-1 and 21-2; and a channel estimation unit 23; a reception buffer 24; a MIMO signal separating and modulating unit 25; and an OR operation unit 28.

In this example, also, the numbers of transmitter antennas 15-i and receiver antennas 21-i are two (i = 1, 2), but the number of antennas should by no means be limited to this. Further, the constituent elements 11-i, 12-i, 13-i, 14-i, 15-i, and 16 of the MIMO transmitter (herein after simply called "transmitter") are the same as or similar to the above-described constituent elements 101-i, 102-i, 103-i, 104-i, 105-i, and 106, respectively, unless otherwise described.

Here, in the MIMO receiver (hereinafter also simply called "receiver") 2, the receiver antenna 21-i receives RF signals transmitted from the MIMO transmitter 1. The radio receiving unit 22-i converts (down-converts) the RF signals, received by the receiver antenna 21-i, into baseband signals. The channel estimation unit (channel estimation means) 23 calculates channel estimation values (channel matrix) between the transmitter antenna 15-i and the receiver antenna 21-i using pilot symbols multiplexed on the received signals. The reception buffer (first memory) 24 temporarily holds the received signals [received signal vector Y ($y_1$, $y_2$)] from the radio receiving unit 22-i and the channel estimation values [channel matrix H ($h_{11}$, $h_{12}$, $h_{21}$, $h_{22}$)] obtained by the channel estimation unit 23.

The MIMO signal separating and modulating unit 25 separates multiplexed data streams for each transmitter antenna using the information (received signal vector and channel estimation values) held in the reception buffer 24, and generates decoded data. That is, in the present embodiment, when correlation between the receiver antenna 21-i and/or the transmitter antenna 11-i is high, processing corresponding to retransmission combination is performed before MIMO signal separation (will be detailed hereinbelow) by the MIMO signal separating and demodulating unit 203, not after the MIMO signal separation performed as shown in the above formula (6).

In more detail, as in the case of FIG. 15, in a system where the numbers of transmitter antennas and receiver antennas are two, a relationship between a transmission signal vector X and the received signal Y at a time $t_1$ is expressed by the following formula (7), and the relationship between a transmission signal vector X and the received signal Y at a time $t_2$ is expressed by the following formula (8).

$$Y(t_1) = \begin{pmatrix} y_1(t_1) \\ y_2(t_1) \end{pmatrix} = \begin{pmatrix} h_{11}(t_1) & h_{12}(t_1) \\ h_{21}(t_1) & h_{22}(t_1) \end{pmatrix} \begin{pmatrix} x_1 \\ x_2 \end{pmatrix} = H(t_1)X \qquad (7)$$

$$Y(t_2) = \begin{pmatrix} y_1(t_2) \\ y_2(t_2) \end{pmatrix} = \begin{pmatrix} h_{11}(t_2) & h_{12}(t_2) \\ h_{21}(t_2) & h_{22}(t_2) \end{pmatrix} \begin{pmatrix} x_1 \\ x_2 \end{pmatrix} = H(t_2)X \qquad (8)$$

where Hij(t) is a channel estimation value at a time t; H(t) is a channel matrix at a time *t;* Y(t) is a received signal vector at a time t.

In the present embodiment, the channel matrix $H(t_1)$ and the received signal vector $Y(t_1)$ are stored in the reception buffer 24 at a time point $t_1$. Processing corresponding to retransmission combination, as shown in the following formula (9), is performed using the channel matrix $H(t_2)$ which is retransmitted at a time $t_2$ and the received signal vector $Y(t_2)$ and the information [channel matrix $H(t_1)$ and receiving signal vector $Y(t_1)$] stored in the reception buffer 24, whereby the transmission signals (vector X) are reproduced and separated.

$$Y = \begin{pmatrix} y_1(t_1) \\ y_2(t_1) \\ y_1(t_2) \\ y_2(t_2) \end{pmatrix} = \begin{pmatrix} h_{11}(t_1) & h_{12}(t_1) \\ h_{21}(t_1) & h_{22}(t_1) \\ h_{11}(t_2) & h_{12}(t_2) \\ h_{21}(t_2) & h_{22}(t_2) \end{pmatrix} \begin{pmatrix} x_1 \\ x_2 \end{pmatrix} = HX \qquad (9)$$

In this instance, the channel correlation matrix *R* and the correlation vector Z can be obtained similarly using the above formulas (2) and (3) . In addition, it is possible to obtain the transmission signal vector X using the above formulas (4) and (5). Here, since the magnitudes of the correlation matrix *R* and the correlation vector *Z* are the same as those of the previous art of the above formula (1), the amount of processing in the inverse matrix multiplication and the correlation vector operation in the above formula (5) is not increased. Further, at the time of initial transmission, the channel matrix H(t) and the received signal vector Y(t) stored in the reception buffer 24 are sent to the MIMO signal separating and modulating unit 25 as they are, and at the time of retransmission, all the channel matrices H(t) and all the received signal vectors Y(t) are sent to the MIMO signal separating and modulating unit 25.

That is, the MIMO signal separating and modulating unit 25 of the present embodiment functions as a first signal reproducing and separating means which produces and separates signals, sent from the transmitter 1 through the transmitter antennas 15-1 and 15-2, based on (*i*) the retransmission signal retransmitted from the transmitter 1, (*ii*) the channel estimation value obtained by the channel estimation unit 23 with respect to the retransmission signal, and (*iii*) the received signals and the channel estimation values stored in the reception buffer 24.

Accordingly, strictly speaking, "retransmission combination performed before MIMO signal separation" does not carry out "retransmission combination". In the following description, however, for convenience, such an expression will be used.

Next, the decoding unit 26-i, the error detection unit 27-i, and the OR operation unit 28 are similar to the decoding unit 206-i, the error detecting unit 207-i, and the OR operation unit 208, respectively. The decoding unit 26-i performs error correction decoding, such as turbo decoding, onto the demodulation data obtained by the above-mentioned MIMO signal separating and modulating unit 25. The error detection unit 27-i detects errors in the result of the above correction decoding. If no error is detected by the error detection unit 27-i, it means that the demodulation data is correctly reproduced as data stream.

The OR operation unit 28 performs an OR operation on the error detection result obtained by the error detection unit 27-i. If any error is detected in any of the data streams, the OR operation unit 28 outputs a NACK signal; if no error is detected in either stream, the OR operation unit 28 outputs an ACK signal. Such an ACK or NACK signal is transmitted to the transmitter 1 through a radio transmitter unit (not illustrated) of the receiver apparatus 2.

In the MIMO communication system of the present embodiment with the above-described construction, on the transmitter 1, the transmission data stream #i is temporarily held in the transmission buffer 11-i in preparation for retransmission control. After that, the transmission data stream #i is subjected to error correction encoding performed by the encoding unit 12-i, and is then modulated by the modulation unit 13-i with required modulation processing such as QPSK and 16QAM. At this time, the modulation unit 13-i also performs multiplex processing of a pilot symbol and a control symbol.

After that, the modulation signal obtained by the modulation unit 13-i is up-converted by the radio transmitter unit 14-i into an RF signal, and is then sent from the transmitter antenna 15-i to the receiver 2.

On the other hand, on the receiver 2, each receiver antenna 21-i receives the above-mentioned RF signals, and the radio receiver unit 22-i down-converts the received RF signals into baseband signals.

The received signal after being down-converted is input to the channel estimation unit 23, which calculates the channel matrix between the transmitter antenna 15-i and the receiver antenna 21-i using pilot symbols multiplexed on the received signals, and the information is once stored in the buffer.

Here, at the initial transmission, the channel matrix and the received signal vector stored in the reception buffer 24 are sent to the MIMO signal separating and modulating unit 25 as they are, whereas at retransmission, all the channel matrices and the received signal vectors stored in the reception buffer 24 are sent to the MIMO signal separating and modulating unit 25 and are subjected to processing therein.

Using the information (channel matrices and received signal vectors) stored in the reception buffer 24, the MIMO signal separating and modulating unit 25 performs the operation processing of the above formula (9) (that is, at the time of retransmission, an operation is performed based on the channel estimation values with respect to the signals before and after retransmission and the received signal vector), and also obtains a channel correlation matrix $R$ and a correlation vector Z using the above formulas (2) and (3), and further obtains the transmission signal vector X (demodulated data for data stream #i) using the above formulas (4) and (5).

The thus obtained demodulated data is subjected to error correction decoding performed by the decoding unit 26-i. Here, if no error is detected in the data by the error detection unit 27-i, it means that the data is reproduced as a data stream. The error detection result is subjected to an OR operation by the OR operation unit 28 with respect to two data streams #i. If an error is detected in any of the data streams #i, a NACK signal is generated and sent to the transmitter 1. In contrast, if an error is not detected in either of the data streams #i, an ACK signal is generated and sent to the transmitter 1.

On the MIMO transmitter 1, the radio receiver unit (not illustrated) demodulates the ACK/NACK signal and notifies the retransmission control unit 16, which performs control, based on the ACK/NACK signal, in such a manner that retransmission data is output from the transmission buffer 11-i with a specified timing.

As described so far, according to the present embodiment, in comparison with the previous case where retransmission combination is performed after MIMO signal separation, MIMO signal separation processing is more efficiently performed even when antenna correlation is high. In addition, in retransmission combination, sufficient characteristic improvement can be realized. Hence, the efficiency of retransmission control is improved and throughput of data communication is also improved.

(A1) Modified Example of the First Embodiment

Next, a description will be made of a method in which MLD is used as an MIMO signal separation algorism. With this method, it is possible to obtain a diversity gain in accordance with the number of receiver antennas, so that the method is the most superior method in characteristics. Here, taking the above formula (1) as an example, in MLD, the least square Euclidian distance is calculated, using the following formula (10), among all the combination of transmission replicas corresponding to the signal point placement of the modulation method.

$$d = \sum_{i=1}^{2} \left| y_i - \sum_{j=1}^{2} h_{ij} x_j \right|^2 \qquad (10)$$

where the index of i represents the receiver antenna number; the index of j represents the transmission antenna number. Further, $x_j$ represents a transmission replica, and there exist four types of replicas per data stream in QPSK modulation; there exist 16 types of replicas per data stream in 16QAM modulation. In the above formula (10), since the number of transmitter antennas is two, $4^2 = 16$ types of combinations of transmission replicas exist in the QPSK modulation, and $16^2 = 256$ types of combinations of transmission replicas exist in the 16QAM modulation.

In a commonly used method, the least square Euclidian distance is calculated for each bit which is assigned to each signal constellation, and the logarithm likelihood ratio $\Lambda$ for each bit is calculated from its difference as shown in the following formula (11).

$$\Lambda = d(bit'1') - d(bit'0') \qquad (11)$$

where d(bit'1') represents the least square Euclidian distance of bit "1"; d(bit'0') represents the least square Euclidian distance of bit "0". In the previous retransmission combination, the logarithm likelihood ratio for each bit is calculated with the following formula (12).

$$\Lambda(t_1) + \Lambda(t_2) \qquad (12)$$

In contrast, in the present modified example (MIMO signal separating and modulating unit 25), at the time of retransmission signal reception, the least square Euclidian distance is obtained using the following formula (13) based on the information stored in the reception buffer 24, thereby realizing retransmission combination processing performed before MIMO signal separation.

$$d = \sum_{i=1}^{2} \left| y_i(t_1) - \sum_{j=1}^{2} h_{ij}(t_1) x_j \right|^2 + \sum_{i=1}^{2} \left| y_i(t_2) - \sum_{j=1}^{2} h_{ij}(t_2) x_j \right|^2 \qquad (13)$$

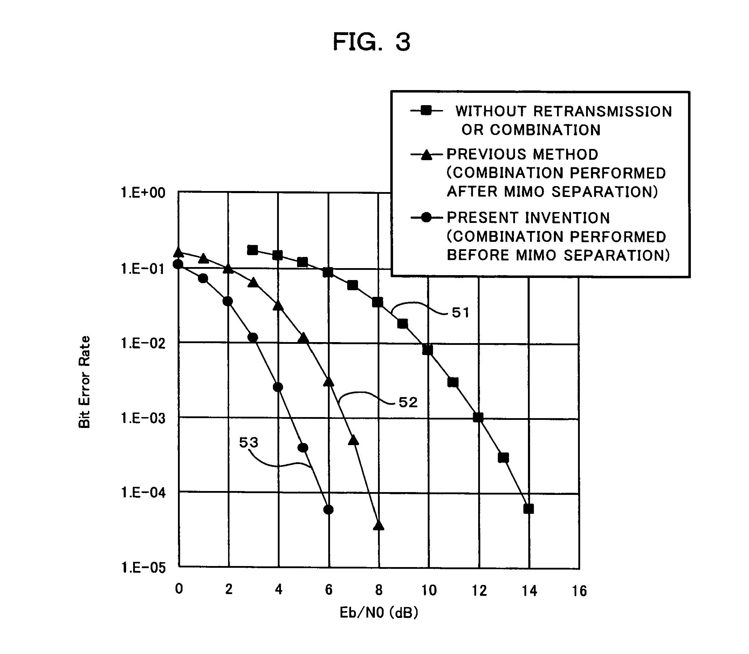

FIG. 3 shows simulation results of the following three cases: (1) a case where retransmission combination processing is performed after MIMO signal separation with the previous method; (2) a case where retransmission combination processing is performed before MIMO signal separation with the method of the present modified example (MLD algorithm); (3) a case where retransmission combination processing is not performed. In this instance, in FIG. 3, the characteristic 51 shows the above case (3) ; the characteristic 52 shows the above case (1); the characteristic 53 shows the above case (2). Further, in this simulation, OFDM (Orthogonal Frequency Division Multiplexing) is employed as an access method, and 16QAM is used as the modulation method, and a turbo code with a coding rate of 3/4 is used as the error correction code. Furthermore, it is assumed that neither fading correlation nor correlation between the antennas at the time of retransmission exists. As indicated in FIG. 3, the present example is effective under conditions where antenna correlation is high and also under conditions where antenna correlation is low.

[B] Second Embodiment

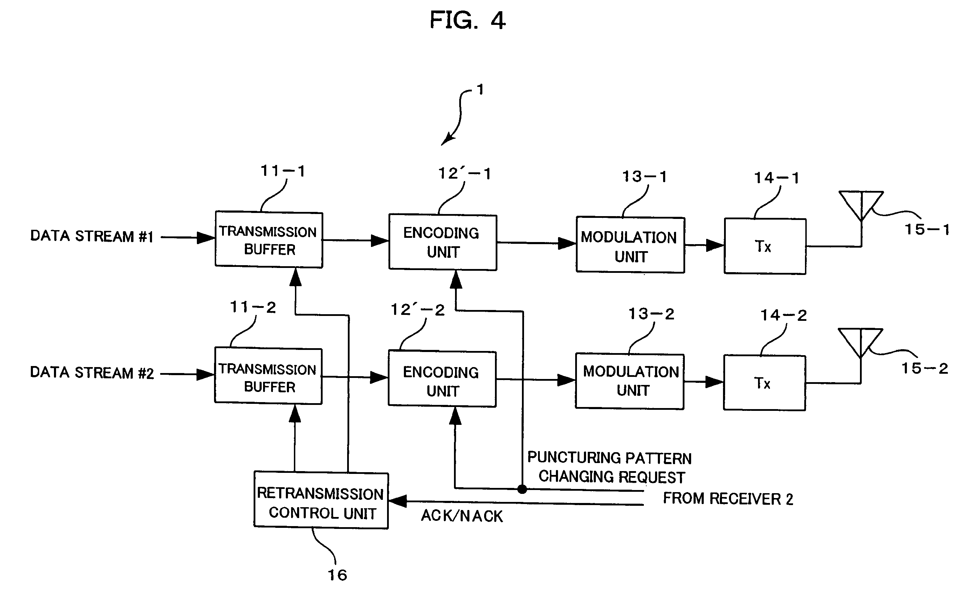

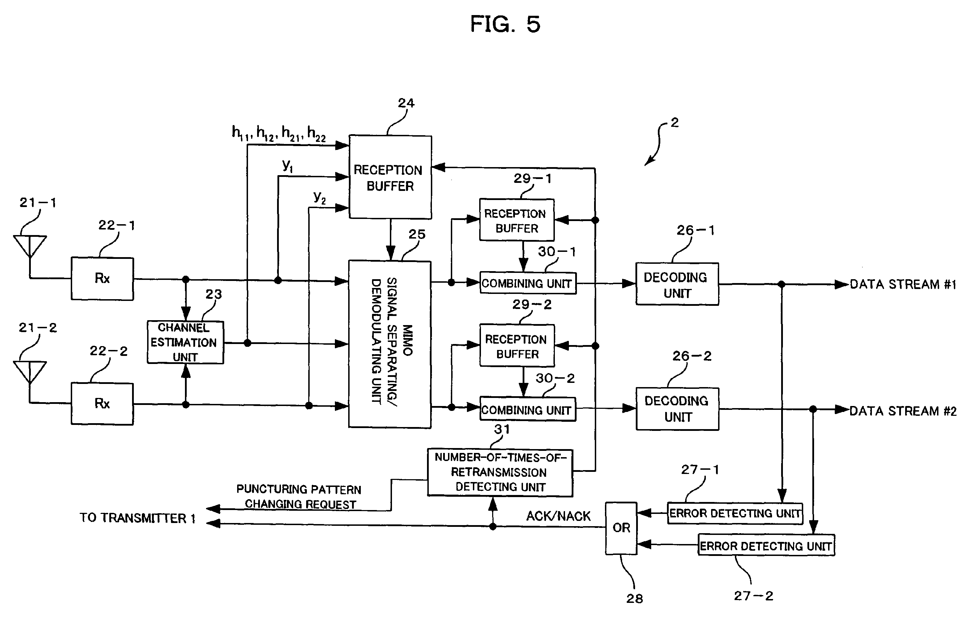

FIG. 4 and FIG. 5 are block diagrams showing constructions of a MIMO transmitter and a MIMO receiver, respectively, constituting a MIMO communication system according to a second preferred embodiment of the present invention. The construction shown in FIG. 1 differs from the transmitter 1 of FIG. 4 in that encoding units 12'-1 and 12'-2 in are provided in place of the encoding unit 12-1 and 12-2. The receiver 2 of FIG. 5 differs from the construction shown in FIG. 2 in that reception buffers 29-1 and 29-2 and combining units 30-1 and 30-2, one for each of the receiver antenna 21-i, are added between the MIMO signal separating and modulating unit 25 and the decoding unit 26-i, and that a number-of-times-of-retransmission detecting unit 31 is also added. In FIG. 4 and FIG. 5, the constituent elements which are given the reference characters already described are the same as or similar to the already described constituent elements unless otherwise described.
Here, in the transmitter 1 of FIG. 4, also, the encoding unit 12'-i performs required error correction encoding, such as turbo encoding, on transmission data from the transmission buffer 11-i. Here, it is possible to change the puncturing pattern of encoded data according to a puncturing pattern changing request (demodulated by the non-illustrated radio receiver unit) sent from the receiver 2. This method is called IR, as already described, and since the encoding rate at the time of retransmission combination becomes small, it is possible to obtain encoding gain.
In the receiver 2 of FIG. 5, the reception buffer (second memory) 29-i temporarily holds the decoded data obtained by the MIMO signal separating and modulating unit 25 in preparation for retransmission combination equivalent to the previous retransmission combination. The combining unit (reproducing and combining means) 30-i combines [addition with the above formula (6) ] the previous demodulated data [transmission signal vector X $(t_1)$] stored in the reception buffer 29-i with the demodulated data [transmission signal vector X$(t_2)$] with respect to the retransmission signal.

The number-of-times-of-retransmission detecting unit 31 monitors the output (ACK/NACK signals) of the OR operation unit 28 and detects (counts) the number of times of retransmission (the number of times of outputs of NACK signals). If the number of times of retransmission detected exceeds a specified number of times, the number-of-times-of-retransmission detecting unit 31 transmits a puncturing pattern changing request to the transmitter 1 through a non-illustrated radio transmitter unit. Further, the number-of-times-of-retransmission detecting unit 31 controls writing and reading (information supply to the MIMO signal separating and modulating unit 25 and information supply from the reception buffer 29-i to the combining unit 30-i) in the reception buffer 24 and reception buffer 29-i, and selectively uses retransmission combination processing performed before and after MIMO signal separation according to the number of times of retransmission.

That is, the number-of-times-of-retransmission detecting unit 31 has a function as a condition detecting means which detects, as a specified condition relating to a received signal, the number of times of retransmission of the reception signal exceeds a specified number of times and a function as a puncturing pattern changing request means which requests, when the above condition is detected, the transmitter 1 to change the puncturing pattern and to send a retransmission signal. The MIMO signal separating and modulating unit 25 has a function as a second signal reproducing and separating means which reproduces and separates, when the number-of-times-of-retransmission detecting unit 31 detects a fact that the number of times of retransmission exceeds the specified number of times, signals transmitted from the transmitter 1 through the transmitter antenna 15-i based on normal MIMO signal separation processing, that is, the received signals (vectors) received by each receiver antenna 21-i and on the channel estimation values (channel matrix) obtained by the channel estimation unit 23 with respect to the received signals.

Now, a description will be made hereinbelow of an operation of a MIMO communication system according to the present embodiment with the above-described construction.

Here, it is assumed that retransmission combination processing is performed only once before MIMO signal separation. At the time of initial transmission, on the receiver 2, the MIMO signal separating and modulating unit 25 performs normal MIMO signal separating and decoding processing, and the error detection unit 27-i monitors (detects) whether an error is present in the modulated data. If any error is detected, a request for retransmission is sent to the transmitter 1.

In response to this, the transmitter 1 performs the first-time retransmission. On the receiver 2, at this the time of the first retransmission, the MIMO signal separating and modulating unit 25 performs retransmission combination processing before MIMO signal separation using information (transmission signal vector and channel matrix) about the initial transmission signal stored in the reception buffer 24 and information about the first-time retransmission signal (transmission signal vector and channel matrix), as described in the first (or its modified example) embodiment.

If any error still occurs in that case, that is, when the number of times of retransmission detected by the number-of-times-of-retransmission detecting unit 31 exceeds a specified number of times (once), the receiver 2 requests the transmitter 1 to change the puncturing pattern and concurrently sends a retransmission request, and stores decoded data in the reception buffer 29-i after MIMO signal separation.

As a result, the transmitter 1 performs the second-time retransmission with a puncturing pattern being changed. Since this second-time signal retransmission differs in puncturing pattern, the receiver 2 does not perform retransmission combination processing before MIMO signal separation but performs normal retransmission combination processing by the MIMO signal separating and modulating unit 25. That is, the combining unit 30-i combines (adds) the signal which has been combined and demodulated before MIMO signal separation using the initial transmission signal and the first-time retransmission signal, the signal being stored in the reception buffer 29-i, with the second-time retransmission signal having a different puncturing pattern, the signal being demodulated with normal MIMO signal separation processing by the MIMO signal separating and modulating unit 25.

When the third-time retransmission is performed, on the receiver 2, the combining unit 30-i combines (*i*) the result of combination and demodulation of the second-time retransmission signal and the third-time retransmission signal before MIMO signal separation and (*ii*) the result of combination and demodulation of the initial transmission signal and the first-time retransmission before MIMO signal separation. Here, the above procedure is only an example, and processing can be performed in other combinations or orders.

As described so far, in addition to the retransmission combination processing before MIMO signal separation, retransmission combination processing after MIMO signal separation can also be used. That is, the number of times of retransmission combination before MIMO signal separation is limited to a specified number of times, and if the number of times of retransmission exceeds the specified number of times, processing is switched into retransmission combination processing after MIMO signal separation. At that time, a puncturing pattern changing request is made to the transmitter 1, thereby obtaining encoding gain due to IR.

Further, in comparison with the method in which retransmission combination processing is performed before MIMO signal separation, the method in which retransmission combination is performed after MIMO signal separation is advantageous in that the capacity necessary for the retransmission buffer, that is, the reception buffer 29-*i*, is small. Further, even when the number of times of retransmission is increased, the necessary processing amount or the buffer amount is not increased.

In contrast, in the method in which retransmission and combination processing is performed before MIMO signal separation, a channel matrix must be stored in the reception buffer 24 in addition to the received signal vectors. Normally, received signal vectors and channel matrices need an increased number of quantization bits in order to assure adequate operation accuracy. Further, in the method in which retransmission combination processing is performed before MIMO signal separation, the information amount of channel matrices and received signal vectors stored in the reception buffer 24 is increased in parallel with the number of times of retransmission.

Therefore, by means of switching into the retransmission combination processing after MIMO signal separation when the number of times of retransmission exceeds the specified number of times as already described, it becomes possible to suppress the capacity of reception buffer 24 necessary for retransmission combination before MIMO signal separation to the minimum and to realize the above described advantages.

(B1) Modified Example of the Second Embodiment

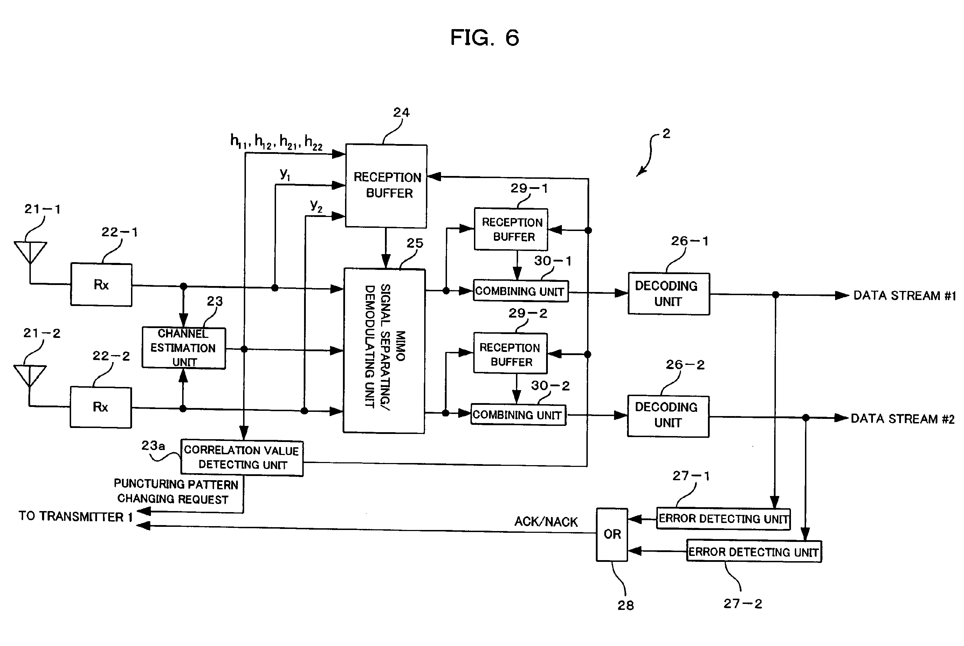

FIG. 6 is a block diagram showing a modified example of a MIMO receiver constituting the MIMO communication system already described with reference to FIG. 5. The receiver 2 of FIG. 6 differs from the construction shown in FIG. 5 in that a correlation value detecting unit 23a is provided in place of the number-of-times-of-retransmission detecting unit 31. In this instance, the construction of the transmitter is the same as that of the transmitter 1 of FIG. 4.

Here, the correlation value detecting unit 23a detects correlation values of the channel matrices obtained by the channel estimation unit 23. If the correlation value exceeds a specified value, the correlation value detecting unit 23a controls writing to and reading from the reception buffers 24, 29-1, and 29-2 (information supply from the reception buffer 24 to the MIMO signal separating and modulating unit 25 and information supply from the reception buffer 29-i to the combining unit 30-i), and makes a puncturing pattern changing request to the transmitter 1. As an example of calculation of the correlation value, a description will be made hereinblow of a method in which channel correlation matrix $R$ obtained by the above formula (2) is used. Now, assuming that the channel correlation matrix $R$ is expressed by the following formula (14),

$$ R = \begin{pmatrix} r_{11} & r_{12} \\ r_{21} & r_{22} \end{pmatrix} \tag{14} $$

the correlation value p can be obtained by the following formula (15) as a ratio of elements in the principal diagonal to non-elements in the principal diagonal.

$$ \rho = \frac{r_{12} + r_{21}}{r_{11} + r_{22}} \tag{15} $$

In the present example, retransmission combination processing before and after MIMO signal separation is switched based on the magnitude of the correlation value p obtained by the correlation value detecting unit 23a. That is, retransmission combination processing before MIMO signal separation is positively performed when the correlation between channel matrices exceeds a specified value, that is, when correlation between the transmitter antenna 15-i and the receiver antenna 21-i is high. As a result, if correlation between the transmitter antenna 15-i and the receiver antenna 21-i is equal to or below a previously determined threshold value, processing is switched into retransmission combination processing after MIMO signal separation by the MIMO signal separating and modulating unit 25 (combination by the combining unit 30-i). At that time, the receiver 2 makes a puncturing pattern request to the transmitter 1, thereby obtaining encoding gain due to IR.

[C] Third Embodimet

Next, in the third and the fourth embodiment, a method for changing transmitter antennas at retransmission and a method for changing frequencies (carrier frequencies) at the time of retransmission are suggested in order to cope with characteristics deterioration when the fading correlation of the retransmission signal is high, such as in a case where retransmission interval is short in comparison with fading variation. With this method, even when correlation at the time of retransmission does not become low only with fading variation, correlation of the retransmission signal can be decreased, so that sufficient diversity gain can be obtained in combination before MIMO signal separation.

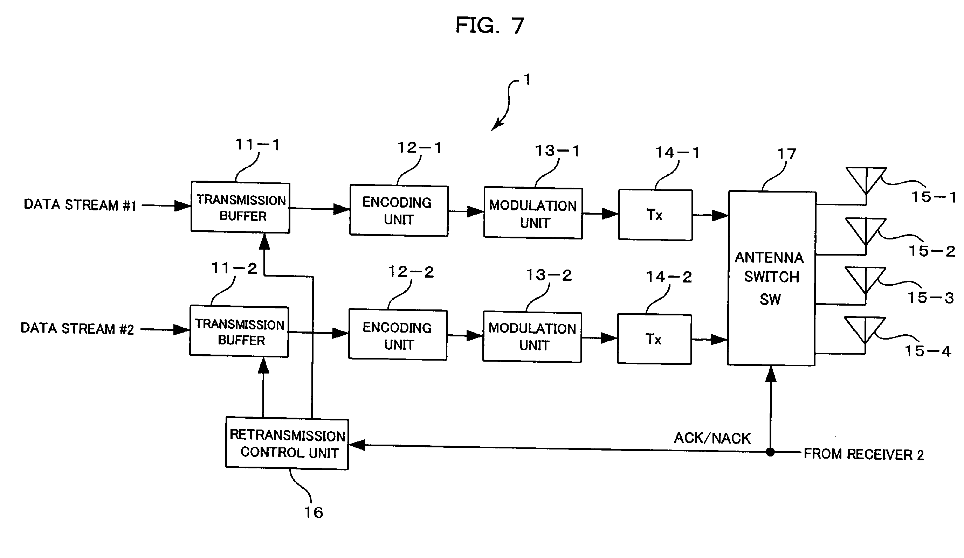

FIG. 7 is a block diagram showing a construction of a MIMO transmitter constituting a MIMO communication system according to a third preferred embodiment of the present invention. The transmitter 1 of FIG. 7 differs from the construction of FIG. 1 in that four transmitter antennas 15-1, 15-2, 15-3, and 15-4 are provided and that an antenna switch 17, which selects an arbitrary two transmitter antennas 15-k, out of the transmitter antenna 15-k (k = 1 through 4), is provided. In this instance, in FIG. 7, the constituent elements which are given the reference characters already described are the same as or similar to the already described constituent elements unless otherwise described. Further, the construction of the receiver end is the same as that of the receiver 2 of FIG. 2.

Here, in more detail, the antenna switch 17 selects an arbitrary two transmitter antennas 15-k, and switches the transmitter antennas 15-k for use in transmission at every retransmission performed, according to the ACK/NACK signal which is fedback from the receiver 2. At that time, the antennas can be selected following a predetermined pattern or at random.

With this arrangement, even when retransmission interval is short with respect to fading variation (fading correlation tends to be high), it is possible to prevent correlation (fading correlation) from becoming high, so that adequate diversity gain can be obtained (characteristics deterioration is suppressed) in retransmission combination processing before MIMO signal separation.

In this instance, processing for switching the transmitter antennas 15-i is performed, and thus there is no necessity that any special processing be performed on the receiver 2.

[D] Fourth Embodiment

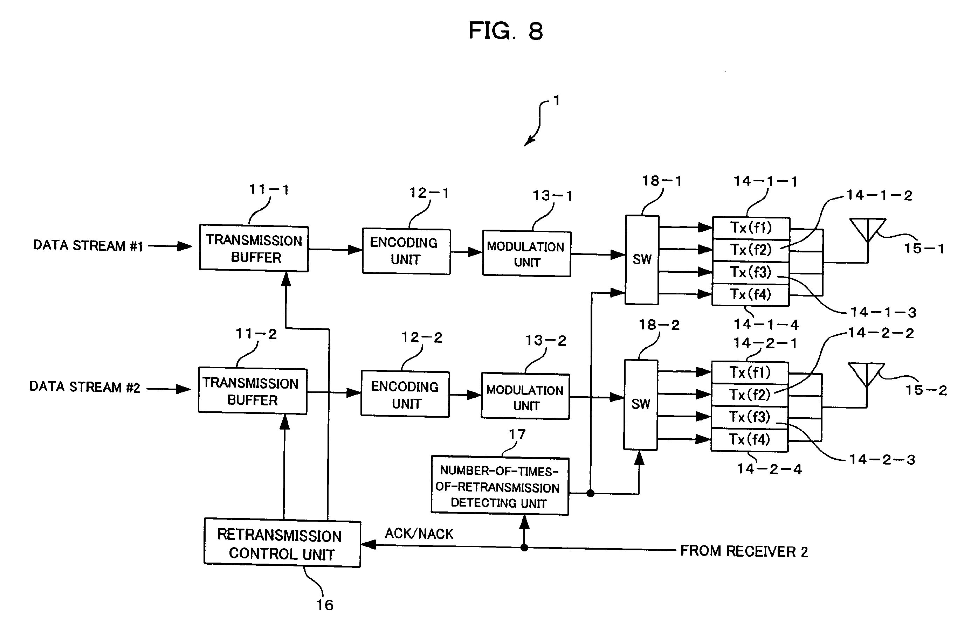

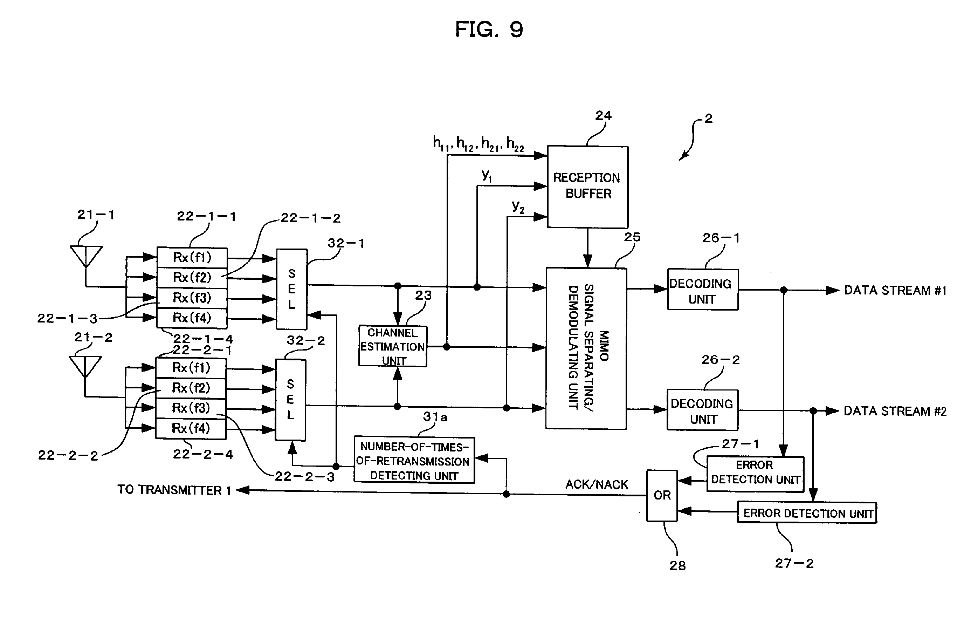

FIG. 8 and FIG. 9 are block diagrams each showing a construction of a MIMO transmitter and a MIMO receiver, respectively, constituting a MIMO communication system according to a fourth preferred embodiment of the present invention. The transmitter 1 of FIG. 8 includes:
transmission buffers 11-1 and 11-2; encoding units 12-1 and 12-2; modulation units 13-1 and 13-2; the transmitter antennas 15-1 and 15-2; more than one (here, four) radio transmitter unit (Tx) 14-1-1, 14-1-2, 14-1-3, and 14-1-4 which copes with two or more different frequencies (here, four types: f1, f2, f3, and f4) with respect to one of the two data streams; more than one (here, four) radio transmitter unit (Tx) 14-2-1, 14-2-2, 14-2-3, and 14-2-4 which copes with two or more different frequencies (here, four types: f1, f2, f3, and f4) with respect to the remaining one of the two data streams; a number-of-times-of-retransmission detecting unit 17; a switch (SW) 18-1 for switching among the radio transmitter units 14-1-j (j = 1 through 4), and a switch (SW) 18-2 for switching among radio the transmitter units 14-2-j.

Here, the number-of-times-of-retransmission detecting unit 17 monitors ACK/NACK signals which are fedback from the receiver 2, and counts the number of times of retransmission to the receiver 2. The switch 18-1 selectively switches (changes) the radio transmitter unit 14-1-j to be used, according to the number of times of transmission detected by the number-of-times-of-retransmission detecting unit 17. The switch 18-2 also selectively switches (changes) the radio transmitter unit 14 - 2 - j used, according to the number of times of transmission detected by the number-of-times-of-retransmission detecting unit 17.

The radio transmitter unit 14-1-j converts (up-converts) the modulated signal (baseband signal), input from the modulation unit 13-1 via the switch 18-1, into an RF signal at a frequency of fj. The radio transmitter unit 14-2-j converts (up-converts) the modulated signal (baseband signal), input from the modulation unit 13-2 via the switch 18-2, into an RF signal of a frequency of fj.

That is, in the transmitter 1 of the present example, there are prepared more than one radio transmitter unit 14-i-j corresponding to more than one carrier frequency (hereinafter also simply called "carrier") fj for more than one data stream (transmitter antenna 15-i). Every time retransmission is performed, the radio transmitter unit 14-i-j is switched (changed), thereby changing the carrier fj used in transmission.

On the other hand, the receiver 2 of FIG. 9 includes: receiver antennas 21-1 and 21-2 already described; a channel estimation unit 23; a reception buffer 24; MIMO signal separating and modulating unit 25; decoding units 26-1 and 26-2; error detection units 27-1 and 27-2; and an OR operation unit 28. Further, corresponding to the construction of the transmitter 1 the receiver 2 includes: more than one (here, four) radio receiver unit (Rx) 22-1-1, 22-1-2, 22-1-3, 22-1-4, which copes with two or more different carrier frequencies (here, four types, f1, f2, f3, and f4) for one of the receiver antennas 21-1; more than one (here, four) radio receiver unit (Rx) 22-2-1, 22-2-2, 22-2-3, and 22-2-4, which also copes with two or more different carrier frequencies (here, four types, f1, f2, f3, and f4) for the other of the receiver antennas 21-2; a selector (SEL) 32-1 which selects one of the outputs of the radio receiver units 22-1-j; a selector (SEL) 32-2 which selects one of the outputs of the radio receiver units 22-2-j; and a number-of-times-of-retransmission detecting unit 31a.

Here, the radio receiver unit 22-1-j converts (down-converts) the RF signal of a carrier frequency of fj, which has been received by the receiver antennas (21-1), into a baseband signal. Likewise, the radio receiver unit 22-2-j converts (down-converts) the RF signal of a carrier frequency of fj, which has been received by the receiver antennas (21-2), into a baseband signal.

The number-of-times-of-retransmission detecting unit 31a monitors the outputs (ACK/NACK signals) of the OR operation unit 28, and detects (counts) the number of times of retransmission. The selector 32-1 selectively outputs any of the outputs of the radio receiver unit 22-1-j provided for one of the receiver antennas 21-1 to the channel estimation unit 23 or the MIMO signal separating and modulating unit 25, in accordance with the detection result obtained by the number-of-times-of-retransmission detecting unit 31a. Likewise, The selector 32-2 selectively outputs any of the outputs of the radio receiver unit 22-2-j provided for one of the receiver antennas 21-2 to the channel estimation unit 23 or the MIMO signal separating and modulating unit 25, in accordance with the detection result obtained by the number-of-times-of-retransmission detecting unit 31a.

That is, the above radio receiver unit 22-i-j and the selector 32-i function as a frequency selectively receiving means which selectively receives a signal whose carrier (frequency) has been changed on the transmitter 1 and then inputs the signal to the channel estimation unit 23 and the MIMO signal separating and modulating unit 25.

In this manner, in response to carrier switching performed on the transmitter 1, which has been already described with reference to FIG. 8, the receiver 2 of the present example prepares radio receiver unit 22-i-j corresponding to two or more carriers fj for two or more receiver antennas 21-i. By means of switching (changing) radio receiver units 22-i-j (that is, carriers fj) every time the transmitter 1 performs transmission, it is possible to change the reception carrier fj.

In this instance, the carrier fj to be used needs to be switched in accordance with the same pattern (in synchronism) predetermined between the transmitter 1 and receiver 2. In the example described with reference to FIG. 8 and FIG. 9, the number of times of retransmission is evaluated from the ACK/NACK signal fedback from the receiver 2, whereby the carrier fj predetermined according to the number of times of retransmission is selected.

As a result, it is possible to cope with characteristics deterioration in a case where a retransmission interval is short with respect to fading variation, and fading correlation of the retransmission signal is high.

In this instance, except for an operation of switching (changing) the carrier fj in use in accordance with the number of times of retransmission, as described above, the operation of the transmitter 1 and the receiver 2 of the present example is the same as or similar to the operation of the transmitter 1 and the receiver 2 of the first embodiment already described with reference to FIG. 1 and FIG. 2.

[E] Fifth Embodiment

Next, in the following fifth and sixth embodiments, a method will be described with which similar effects to those realized in cases where retransmission control is performed are realized even in cases where no retransmission control is performed. In the following method, carriers whose correlation is low because their frequencies are separate from one another or symbols whose correlation is low because they are separate from one another in the time direction are used. This method is effective in cases where considerably large diversity gain can be obtained by combination processing before MIMO signal separation. Further, the method is also effective in cases where a MIMO signal separation algorithm, such as MLD, which realizes comparatively large diversity gain is applied.

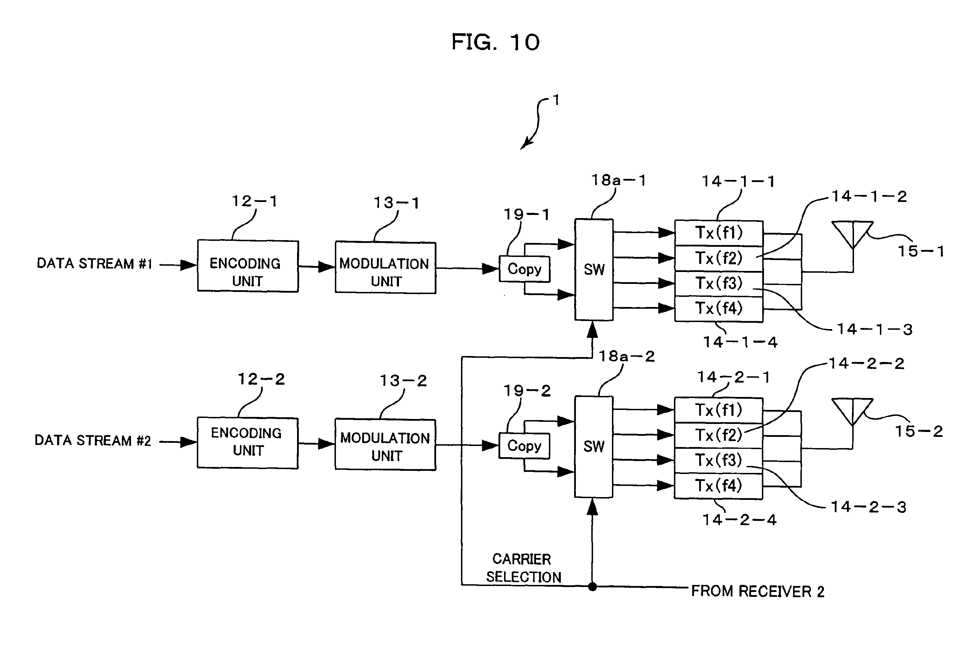

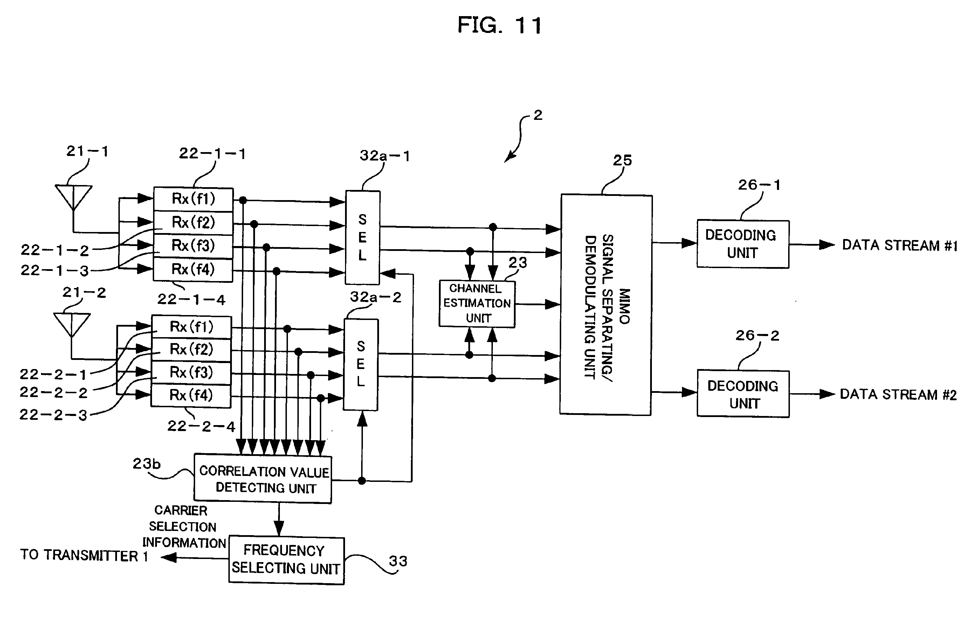

FIG. 10 and FIG. 11 are block diagrams showing constructions of a MIMO transmitter and a MIMO receiver constituting a MIMO communication system according to a fifth preferred embodiment of the present invention. The transmitter 1 of FIG. 10 includes: transmitter antennas 15-1 and 15-2 already described; encoding units 12-1 and 12-2, and modulation units 13-1 and 13-2, provided one for each transmission antenna 15-i (i = 1, 2); radio transmitter units (Tx) 14-i-j (j = 1 through 4) provided one for each transmitter antenna 15-i and each carrier fj. In addition, the transmitter 1 has switches 18a-1 and 18a-2 and copy units 19-1 and 19-2, provided one for each transmitter antenna 15-1 and 15-2. The present example is described on the assumption that retransmission control is not carried out.

Here, the copy unit 19-i (i = 1, 2) copies a modulated signal from the modulation unit 13-i, thereby producing two data streams. The switch 18a-1 selects two arbitrary radio transmitter units 14-1-j from the four radio transmitter units 14-1-j in accordance with a carrier selection signal notified from the receiver 2, and inputs the data streams from the copy unit 19-1 to the selected radio transmitter units 14-1-j. Likewise, the switch 18a-2 selects two arbitrary radio transmitter units 14-2-j from the four radio transmitter units 14-2-j in accordance with the above carrier selection signal, and inputs the data streams from the copy unit 19-2 to the selected radio transmitter units 14-2-j.

That is, the transmitter 1 of the present example has radio transmitter units 14-i-j corresponding in number to carriers fj. A single transmission data stream #i is copied into two data streams, and two radio transmitter units 14-i- j (that is, used carrier fj) are selected from the radio transmitters 14-i-j in accordance with the above carrier selection signal. Here, the carriers fj selected at this time are preferably those whose frequencies are separate from each other. In addition, the radio transmitter unit 14-i-j selected by each transmitter antenna 15-i is radio transmitter units with the same carrier fj.

In other words, the above copy unit 19-i, switch 18a-i , and radio transmitter unit 14-i-j function as a transmitter means which transmits one signal using two or more carriers fj whose frequencies are separate from one another, for each transmitter antenna 15-i.

On the other hand, the receiver 2 of FIG. 11 has the already described receiver antenna 21-1 and 21-2, and radio receiver units (Rx) 22-1-j (j = 1 through 4) and 22-2-j, one for each receiver antenna 21-i and carrier frequency fj, a channel estimation unit 23, a MIMO signal separating and modulating unit 25, and decoding units 26-1 and 26-2 , one for each receiver antenna 21-i. The receiver 2 also includes a correlation detecting unit 23b, selectors 32a-1 and 32a-2, and a frequency selecting unit 33.

Here, the correlation detecting unit 23b detects (selects) two carriers fj whose correlation is low, out of the carriers fj, based on the output of the radio receiver unit 22-i-j. The detected information is supplied to a frequency selecting unit 33 as information for determining a to-be-used carrier fj by the frequency selecting unit 33, and is also supplied to the selector 32a-i as information for determining the output of a to-be-selected carrier fj by the selector 32a-i.

In order to measure correlation between carriers fj, it is conceivable that the transmitter 1 regularly transmits pilot symbols in all the carriers fj. For example, assuming that the channel estimation value of a carrier at a frequency of f1 is given as $h_1$, and that the channel estimation value of a carrier at a frequency of f2 is given as $h_2$, correlation $\rho$ between carriers f1 and f2 is calculated by the following formula (16).

$$\rho = \frac{h_1^* \cdot h_2}{|h_1| \cdot |h_2|} \qquad\qquad (16)$$

The frequency selecting unit 33 determines to-be-used carriers (two types) based on detection information obtained by the correlation detecting unit 23b, and then notifies the information to the transmitter 1 as carrier selection information. The selector 32a-1 selects the outputs of two radio receiver units 22-1-j with low correlation value p, out of the four radio receiver units 22-1-j, in accordance with detection results obtained by the channel estimation unit 23b. Likewise, the selector 32a-2 selects the outputs of two radio receiver units 22-2-j with low correlation value p, out of the four radio receiver units 22-2-j, in accordance with detection results obtained by the correlation detecting unit 23b.

That is, in the present example, for each receiver antenna 21-i, signals of two different carriers fj (a total of four reception signals) are input to the channel estimation unit 23 and the MIMO signal separating and modulating unit 25. In this case, the channel estimation unit 23 and the MIMO signal separating and modulating unit 25 perform channel estimation processing and MIMO signal separating and decoding processing which are to be performed when four receiver antennas receive signals.

According to the communication system of the present embodiment with the above construction, for example, on the transmitter 1, two transmitter antennas 15-1 and 15-2 can send two different data streams, and the same signal can be transmitted at different carriers f1 and f2. Here, assuming that the transmission amount of one data stream is given as *A* (bps), a total of 2A (bps) is obtained.

This means that in the communication system using two carriers of a frequency of f1 and f2, if there are prepared two transmitter antennas on the transmitter end and there are prepared two receiver antennas on the receiver end, a transmission rate equivalent to that in an existing communication method in which information amount A (bps) is transmitted from one transmitter antenna on each carrier and a total of 2A (bps) transmissions is performed, is provided. In this instance, on the receiver end in the existing communication method, diversity reception is performed with two receiver antennas.

On the other hand, in the receiver 2 of the present example, the carrier f1 is received by two receiver antennas 21-1 and 21-2, and the carrier f2 is received by two receiver antennas 21-1 and 21-2. Here, it is assumed that the frequencies of the carrier f1 and the carrier f2 are separate from one another, and that correlation therebetween is adequately low due to frequency selective fading.

By assuming that signals which are received at different carriers f1 and f2 are received by different antennas 21-1 and 21-2, the channel estimation unit 23 and MIMO signal separating and modulating unit 25 perform MIMO signal separation processing similar to that which is performed when signals are received by four antennas.

That is, the channel estimation unit 23 obtains channel estimation value h(f) for each carrier f1 and f2 from signals received from the selector 32a-i. The MIMO signal separating and modulating unit 25 reproduces and separates signals which have been transmitted from the transmitter 1 through each transmitter antenna 15-i using the carriers f1 and f2, based on the above received signals and the above channel estimation value h(f) [this is equivalent to using the above formula (9) in which the channel estimation value h(t) with respect to time is replaced with channel estimation value h(f) with respect to frequencies].

In this manner, in the present example, since four-branch diversity reception is performed, diversity gain larger than that of the previous two-branch diversity can be obtained (for example, see simulation results of FIG. 3).

Here, in the above example, as a previous communication method, the above-mentioned STTD (for example, see the above non-patent document 1) employing two transmitter antennas can be used. In this case, in comparison with the previous method in which a single transmission antenna is used, transmission diversity gain is added, so that diversity gain close to the present example can be obtained. Hence, when applying the present invention, an optimal communication method is selected in accordance with the correlation between the transmitter antenna 15-i and the receiver antenna 21-i and the correlation between carriers fj used.

Further, when using retransmission control, the already described retransmission combination after MIMO signal separation can be used at the same time.


[F] Sixth Embodiment

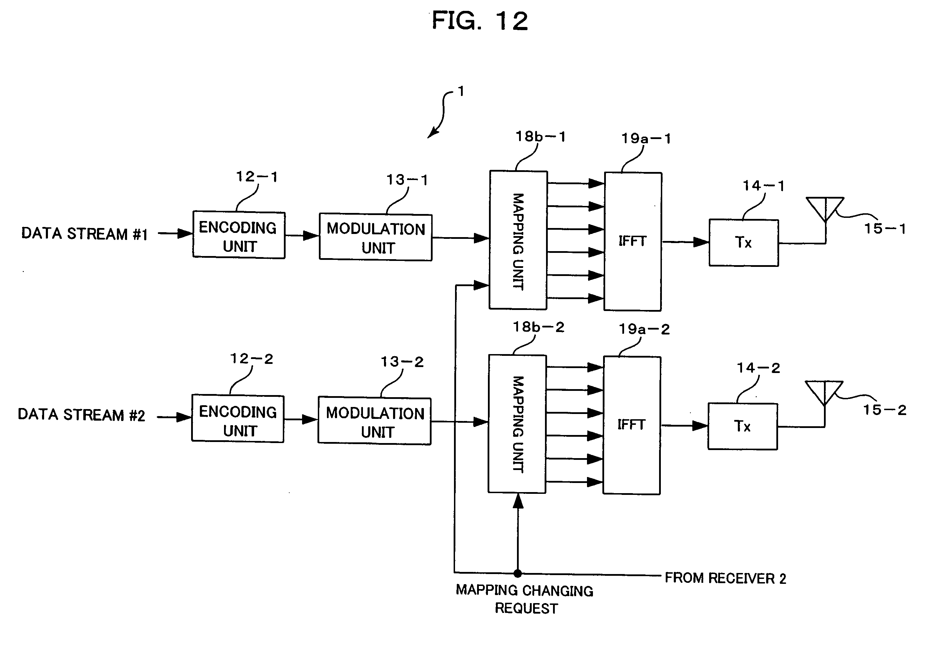

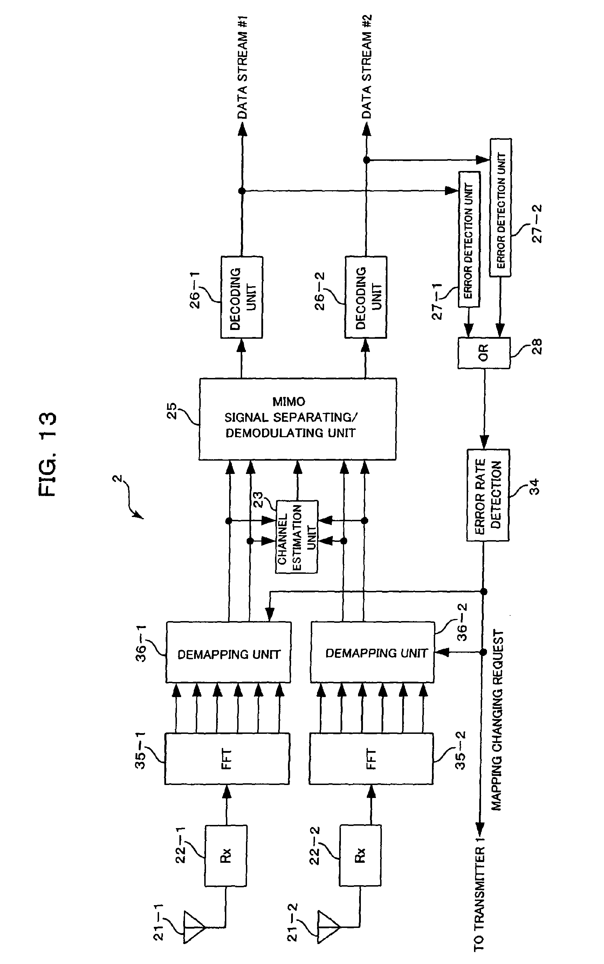

FIG. 12 and FIG. 13 are block diagrams showing constructions of a MIMO transmitter and a MIMO receiver, respectively, constituting a MIMO communication system according to a sixth preferred embodiment of the present invention. The transmitter 1 of FIG. 12 includes: the already described transmitter antennas 15-1 and 15-2; encoding units 12-1 and 12-2, modulation units 13-1 and 13-2, and radio transmitter (Tx) 14-1 and 14-2, provided, one for each transmitter antenna 15-i. The transmitter 1 also has mapping units 18b-1 and 18b-2 and Inverse Fast Fourier Transform (IFFT) units 19a-1 and 19a-2, provided, one for each transmitter antenna 15-i.

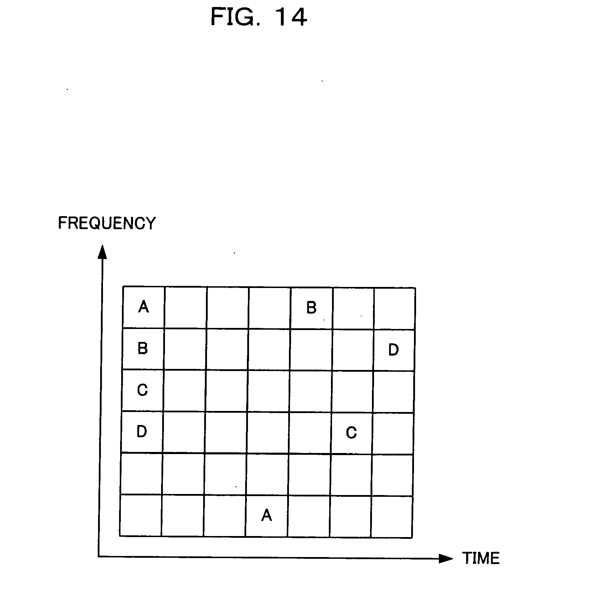

Here, as shown in FIG. 14, for example, the mapping unit 18b-i generates a frame having symbols two-dimensionally divided in frequency and time. Within the frame, using two symbols which are separate from each other in the frequency and time directions, one piece of modulation data is transmitted. That is, one piece of modulation data is copied and mapped to the symbols given the same character A, B, or C, as shown in FIG. 14,

The IFFT unit 19a-i performs IFFT processing onto the output of the mapping unit 18b-i, thereby performing multi carrier modulation. A symbol string at the same time (for example, in FIG. 16, six symbols in the frequency direction) is subjected to multicarrier modulation.

That is, the above mapping unit 18b-i and the above IFFT unit 19a-i function as transmitter means which transmits a single signal, using symbols which are separate from one another at least in time, for each transmitter antenna 15-i.

On the other hand, as already described, the receiver 2 of FIG. 13 includes: receiver antennas 21-1 and 21-2; a channel estimation unit 23; a MIMO signal separating and modulating unit 25, an OR operation unit 28; radio receiver units 22-1 and 22-2, decoding units 26-1 and 26-2, and error detecting units 27-1 and 27-2, provided, one for each receiver antenna 21-i. In addition, the receiver 2 also includes: an error rate detecting unit 34; Fast Fourier Transformation (FFT) units 35-1 and 35-2, and demapping units 36-1 and 36-2, provided, one for each receiver antenna 21-i.

Here, the FFT unit 35-i performs FFT processing onto received signals from the radio receiver unit 22-i, thereby reproducing symbols in the frequency direction. The demapping unit 36-i selects two identical symbols which are separate from each other in time in accordance with the above mapping pattern shown in FIG. 14, and then outputs the selected symbols to the channel estimation unit 23 and the MIMO signal separating and modulating unit 25. Accordingly, the channel estimation unit 23 in this case obtains channel estimation values for the above selected symbols from received signals received by the receiver antenna 21-i, and the MIMO signal separating and modulating unit 25 performs combination processing (signal reproduction and separation processing) equivalent to the above-described retransmission and combination processing performed before MIMO signal separation onto the above two identical symbols based on the channel estimation values.

That is, the present example applies multicarrier transmission utilizing fast Fourier transformation, without preparing radio transmitter units 14-i-j or radio receiver units 22-i-j as shown in the fifth embodiment (FIG. 10andFIG. 11), thereby realizing a system equivalent to that of the fifth embodiment.

In this instance, the transmitter 1 and the receiver 2 use the same mapping pattern as shown in FIG. 14 which is determined beforehand. The error rate detecting unit 34 is an option for a case where more than one mapping pattern is used. The error rate detecting unit 34 detects (calculates) an error rate based on an output (ACK/NACK signal) of the OR operation unit 28. If the error rate exceeds a specified threshold value, changing of mapping patterns to be used is requested to the demapping unit 36-i and the mapping unit 18b-i of the transmitter 1.

According to the MIMO communication system of the present embodiment, on the transmitter 1, data stream #i is subjected to error correction encoding by the encoding unit 12-i, and is then modulated by the modulation unit 13-i with a required modulation method such as QPSK and 16QAM, and then input to the mapping unit 18b-i.

As shown in FIG. 14, the mapping unit 18b-i generates a frame having symbols which are two-dimensionally divided in frequency and time. Within the frame, using two symbols which are separate from each other in the frequency and time directions (symbols which are separate from each other only in time can also be used), one piece of modulation data is transmitted. That is, one piece of modulation data is copied and mapped to the symbols with the same characters A, B, C, and D, as shown in FIG. 14.

The output of the mapping unit 18b-i is input to the IFFT unit 19a-i to be subjected to IFFT processing, whereby a symbol string at a same time (for example, six symbols in the frequency direction in FIG. 16) is subjected to multicarrier modulation. After that, the modulated output is up-converted to RF signals and is then sent from the transmitter antenna 15-1.

On the other hand, on the receiver 2, the RF signals from the transmitter 1 are received by the receiver antenna 21-i, and are then down-converted by the radio receiver unit 22-i into baseband signals. The baseband signal is then input to the FFT unit 35-i.

The FFT unit 35-i performs FFT processing to the received signals with a specified timing, thereby producing more than one symbol in the frequency direction. After that, the demapping unit 36-i selects two identical symbols which are separate from each other in time in accordance with a pattern the same as the mapping pattern used in the transmitter 1 of FIG. 14, and inputs the selected symbols to the channel estimation unit 23 and the MIMO signal separating and modulating unit 25. As a result, combination processing equivalent to the already described retransmission combination processing performed before MIMO signal separation is performed onto the above two identical symbols, and MIMO signal separation and demodulation is performed.

The demodulated data obtained after the MIMO signal separation and demodulation is then subjected to error correction decoding by the decoding unit 26-i. Here, data in which no error is detected by the error detection unit 27-i is data stream #i reproduced. The error detection result is then subjected to an OR operation by the OR operation unit 28 with respect to the two data streams #i, and its result is input to the error rate detecting unit 34.

If an error rate exceeding the threshold value is detected by the error rate detecting unit 34, a mapping pattern changing request is sent to the demapping unit 36-i and the mapping unit 18b-i of the transmitter 1. In response to the mapping pattern changing request, the transmitter 1 and the receiver 2 change their mapping patterns.

As described so far, according to the present example, in one frame, one piece of modulation data is copied to a symbol position which is separate at least in time, revealing low correlation. Thus, in cases where a fading frequency is high, reception characteristics are significantly improved.

In this manner, according to the present invention, by utilizing retransmission control and multicarrier transmission, it is possible to obtain a large diversity gain in the MIMO signal separation algorithm, so that transmission efficiency in data communication is improved.

In comparison with the previous case in which retransmission combination is performed after signal separation, the present invention makes the signal separation reproduction processing function effectively even in cases where antenna correlation is high, so that adequate characteristic improvement is realized. Accordingly, the efficiency of retransmission control is enhanced, thereby improving data communication throughput. Thus, the present invention is significantly useful in the field of radio communication technology.

Further, the present invention should by no means be limited to the above-illustrated embodiment, and various changes or modifications may be suggested without departing from the gist of the invention.

## Claims

1. A radio communication method for radio communication carried out between a transmitter apparatus (1) having a plurality of transmitter antennas (15-1 and 15-2) and a receiver apparatus (2) having a plurality of receiver antennas (21-1 and 21-2), said method comprising:

   on the transmitter apparatus (1),
   transmitting signals from the plurality of transmitter antennas (15-1 and 15-2) of said transmitter apparatus (1),
   on the receiver apparatus (2),
   receiving the signals, sent from said transmitter apparatus (1), through the plurality of receiving antennas (21-1 and 21-2), and obtaining channel estimation values between the transmitter antennas (15-1 and 15-2) and the receiver antennas (21-1 and 21-2) from the reception signals, and holding the channel estimation values and the reception signals; and
   reproducing and separating the signals transmitted from the transmitter antennas (15-1 and 15-2) of the transmitter apparatus (1) based on (*i*) a retransmission signal for a reception signal from the transmitter apparatus (1), (*ii*) channel estimation values obtained with respect to the retransmission signal, and (iii) the reception signals and the channel estimation values held in the receiver apparatus.

2. A radio communication method as set forth in claim 1, wherein if the number of times of retransmission of the reception signal exceeds a specified number of times, the receiver apparatus (2) reproduces and separates the signals transmitted from the transmitter antennas (15-1 and 15-2) of the transmitter apparatus (1) based on the reception signals received through the receiver antennas (21-1 and 21-2) and the channel estimation values obtained with respect to the reception signals, and combines the thus reproduced and separated signals with signals reproduced and separated from signals subsequently retransmitted from the transmitter apparatus (1), and decodes the signals.

3. A radio communication method as set forth in claim 1, wherein if correlation between the channel estimation values of the reception signals is smaller than a specified threshold value, the receiver apparatus (2) reproduces and separates the signals, transmitted from the transmitter apparatus (1) through the transmitter antennas (15-1 and 15-2), based on the reception signals received by the receiver antennas (21-1 and 21-2) and the channel estimation values obtained with respect to the reception signals, and combines the thus reproduced and separated signals with signals reproduced and separated from signals subsequently retransmitted from the transmitter apparatus (1), and decodes the signals.

4. A radio communication method as set forth in claim 2 or claim 3, wherein the receiver apparatus (2) requests the transmitter apparatus (1) to retransmit a signal after changing a puncturing pattern thereof.

5. A radio communication method as set forth in claim 1, wherein said transmitter apparatus (1) changes transmitter antennas (15-1 and 15-2) or frequencies used in retransmission.

6. A radio communication method for radio communication carried out between a transmitter apparatus (1) having a plurality of transmitter antennas (15-1 and 15-2) and a receiver apparatus (2) having a plurality of receiver antennas (21-1 and 21-2), said method comprising:

   on the transmitter apparatus (1)
   transmitting signals from the transmitter antennas (15-1 and 15-2) using individual carriers whose frequencies are separate from one another or using multiple symbols which are separate from one another at least in time, on the receiver apparatus (2)
   receiving the signals transmitted from the transmitter apparatus (1) through the receiver antennas (21-1 and 21-2), and obtaining channel estimation values for the multiple carriers or symbols from the reception signal, reproducing and separating the signals, transmitted from the transmitter antennas (15-1 and 15-2) of the transmitter apparatus (1), based on the reception signals and the channel estimation values for the multiple carriers or symbols.

7. A receiver apparatus (2) for use in a radio communication system in which radio communication is carried out between a transmitter apparatus (1) having a plurality of transmitter antennas (15-1 and 15-2) and a receiver apparatus (2) having a plurality of receiver antennas (21-1 and 21-2), said receiver apparatus comprising:
   channel estimation means (23) which obtains channel estimation values between the plurality of transmitter antennas (15-1 and 15-2) and the plurality of receiver antennas (21-1 and 21-2) from received signals received by the receiver antennas from the transmitter apparatus (1) ;
   a first memory (24) for storing therein the reception signals and the channel estimation values obtained by said channel estimation means (23); and
   first signal reproducing and separating means (25) which reproduces and separates the signals transmitted from the transmitter antennas (15-1 and 15-2) of the transmitter apparatus (1) based on (i) a retransmission signal for a reception signal from the transmitter apparatus (1), (*ii*) channel estimation values obtained with respect to the retransmission signal by said channel estimation means (23), and (*iii*) the reception signals and the channel estimation values held in said first memory (24).

8. A receiver apparatus as set forth in claim 7, further comprising:

   condition detecting means which detects a specified condition relating to the reception signals;
   second signal reproduction means (25) which reproduces and separates, if said condition detecting means detects the specified condition, the signals transmitted from the transmitter apparatus (1) based on the reception signals received through the receiver antennas (21-1 and 21-2) and the channel estimation values obtained with respect to the reception signals by said channel estimation means (23);
   a second memory (29-1 and 29-2) which stores therein the signals obtained by the first signal reproducing and separating means (25);
   reproducing and combining means (30-1 and 30-2) which combines the signals that are obtained by said second signal reproducing and separating means (25) with respect to the retransmission signal transmitted from said transmitter apparatus (1) for a reception signal with the signals stored in said second memory (29-1 and 29-2).

9. A receiver apparatus as set forth in claim 8,

wherein said condition detecting means is provided as a number-of-times-of-retransmission detecting means (31) which detects a fact that the number of times of transmission exceeds a specified number of times, as said specified condition.

10. A receiver apparatus as set forth in claim 8, wherein said condition detecting means is provided as a correlation value detecting means (23a) which detects a fact that correlation of the channel estimation values, obtained by said channel estimation means (23), is smaller than a specified threshold value.

11. A receiver apparatus as set forth in any one of claim 8 through claim 10, further comprising puncturing pattern changing request means (31 and 23a) which requests, if said condition detecting means detects the specified condition, said transmitter apparatus (1) to transmit the retransmission signal after changing a puncturing pattern thereof.

12. A receiver apparatus as set forth in claim 7, wherein said transmitter apparatus (1) further comprises frequency changing means (18-1, 18-2, 14-1-1 through 14-1-4, and 14-2-1 through 14-2-4), which changes frequencies used at the time of the retransmission, and wherein said receiver apparatus (2) further comprises frequency selecting and receiving means (22-1-1 through 22-1-4 and 22-2-1 through 22-2-4) which selectively receives the signal whose frequency has been changed and then inputs the signal to said channel estimation means (23) and said second signal reproduction means (25).

13. A radio communication system in which communication carried out between a transmitter apparatus (1) having a plurality of transmitter antennas (15-1 and 15-2) and a receiver apparatus (2) having a plurality of receiver antennas (21-1 and 21-2), wherein said transmitter apparatus (1) includes:

transmitter means (19-1, 19-2, 18a-1, 18a-2, 18b-1, 18b-2, 19a-1, and 19a-2), provided, one for each of the transmitter antennas (15-1 and 15-2) for transmitting a single signal, said transmitter apparatus transmitting signals from the transmitter antennas (15-1 and 15-2) using individual carriers whose frequencies are separate from one another or using multiple symbols which are separate from one another at least in time, and

wherein said receiver apparatus (2) includes:

channel estimation means (23) which receives the signals transmitted from the transmitter apparatus (1) through the receiver antennas (21-1 and 21-2), and obtains channel estimation values for the multiple carriers or symbols from the reception signal; and
a signal reproducing and separating means (25) which reproduces and separates the signals, transmitted from the transmitter antennas (15-1 and 15-2) of the transmitter apparatus (1), based on the reception signals and the channel estimation values obtained by said channel estimation means (23).

14. A transmitter apparatus (1) which carries out radio communication with a receiver apparatus (2) having a plurality of receiver antennas (21-1 and 21-2), said transmitter apparatus comprising:

a plurality of transmitter antennas (15-1 and 15-2); and
transmitter means (19-1, 19-2, 18a-1, 18a-2, 18b-1, 18b-2, 19a-1, and 19a-2), provided, one for each of the transmitter antennas (15-1 and 15-2) for transmitting a single signal, said transmitter apparatus (1) transmitting signals from the transmitter antennas (15-1 and 15-2) using individual carriers whose frequencies are separate from one another or using multiple symbols which are separate from one another at least in time.

15. A receiver apparatus (2) which carries out radio communication with a transmitter apparatus (1) having a plurality of transmitter antennas (15-1 and 15-2), said receiver apparatus comprising:

a plurality of receiver antennas (21-1 and 21-2);
channel estimation means (23) which receives the signals transmitted from the transmitter apparatus (1), which transmits signals using individual carriers whose frequencies are separate from one another or using multiple symbols which are separate from one another at least in time, through the receiver antennas (21-1 and 21-2), and obtains channel estimation values for the multiple carriers or symbols from the reception signal;
a signal reproducing and separating means (25) which reproduces and separates the signals, transmitted from the transmitter antennas (15-1 and 15-2) of the transmitter apparatus (1), based on the reception signals and the channel estimation values obtained by said channel estimation means (23).

FIG. 1

DATA STREAM #1 → TRANSMISSION BUFFER (11-1) → ENCODING UNIT (12-1) → MODULATION UNIT (13-1) → Tx (14-1) → 15-1

DATA STREAM #2 → TRANSMISSION BUFFER (11-2) → ENCODING UNIT (12-2) → MODULATION UNIT (13-2) → Tx (14-2) → 15-2

ACK/NACK FROM RECEIVER 2 → RETRANSMISSION CONTROL UNIT (16)

1

FIG. 2

FIG. 3

EP 1 777 868 A1

# FIG. 4

DATA STREAM #1 → TRANSMISSION BUFFER (11-1) → ENCODING UNIT (12'-1) → MODULATION UNIT (13-1) → Tx (14-1) → 15-1

DATA STREAM #2 → TRANSMISSION BUFFER (11-2) → ENCODING UNIT (12'-2) → MODULATION UNIT (13-2) → Tx (14-2) → 15-2

RETRANSMISSION CONTROL UNIT (16)

PUNCTURING PATTERN CHANGING REQUEST

FROM RECEIVER 2

ACK/NACK

FIG. 5

FIG. 6

EP 1 777 868 A1

FIG. 7

EP 1 777 868 A1

# FIG. 8

FIG. 9

# FIG. 10

DATA STREAM #1 → ENCODING UNIT (12-1) → MODULATION UNIT (13-1) → Copy (19-1) → SW (18a-1) → Tx(f1) (14-1-1), Tx(f2) (14-1-2), Tx(f3) (14-1-3), Tx(f4) (14-1-4) → 15-1

DATA STREAM #2 → ENCODING UNIT (12-2) → MODULATION UNIT (13-2) → Copy (19-2) → SW (18a-2) → Tx(f1) (14-2-1), Tx(f2) (14-2-2), Tx(f3) (14-2-3), Tx(f4) (14-2-4) → 15-2

CARRIER SELECTION — FROM RECEIVER 2

EP 1 777 868 A1

# FIG. 11

# FIG. 12

DATA STREAM #1 → ENCODING UNIT (12-1) → MODULATION UNIT (13-1) → MAPPING UNIT (18b-1) → IFFT (19a-1) → Tx (14-1) → antenna (15-1)

DATA STREAM #2 → ENCODING UNIT (12-2) → MODULATION UNIT (13-2) → MAPPING UNIT (18b-2) → IFFT (19a-2) → Tx (14-2) → antenna (15-2)

MAPPING CHANGING REQUEST — FROM RECEIVER 2

EP 1 777 868 A1

# FIG. 13

EP 1 777 868 A1

# FIG. 14

FREQUENCY

| | | | | | | |
|---|---|---|---|---|---|---|
| A | | | | B | | |
| B | | | | | | D |
| C | | | | | | |
| D | | | | | C | |
| | | | | | | |
| | | | A | | | |

TIME

## FIG. 15

# FIG. 16

# FIG. 17

DATA STREAM #1

DATA STREAM #2

TO TRANSMITTER 100 ←  ACK/NACK

EP 1 777 868 A1

European Patent Office

**EUROPEAN SEARCH REPORT**

Application Number

EP 06 25 0616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/203456 A1 (ONGGOSANUSI EKO N [US] ET AL) 14 October 2004 (2004-10-14)<br>* page 1, left-hand column, paragraph 5 - right-hand column, paragraph 6 *<br>* page 1, right-hand column, paragraph 8 - page 2, left-hand column, paragraph 8 *<br>* page 2, right-hand column, paragraph 19 - page 3, left-hand column, paragraph 19 *<br>* page 4, left-hand column, paragraph 27 - right-hand column, paragraph 30 *<br>* page 5, left-hand column, paragraphs 32,33 *<br>* page 5, right-hand column, paragraph 36 - paragraph 38; figures 1,3 *<br>----- | 1,2,4-9, 11,13-15 | INV.<br>H04L1/18<br>H04L1/02 |
| X | WO 03/101029 A (NOKIA CORP [FI]; HOTTINEN ARI [FI]) 4 December 2003 (2003-12-04)<br>* page 3, line 1 - line 5 *<br>* page 12, paragraph 59 - page 13, paragraph 61 *<br>* page 14, paragraph 64 - page 15, paragraph 65 *<br>* page 16, line 4 - line 24 *<br>* page 17, paragraph 73 *<br>* page 18, paragraph 76 *<br>* page 23, paragraph 94 *<br>* page 24, paragraph 101 - page 25, paragraph 102 *<br>* page 25, paragraph 108 - page 25, paragraph 108 *<br>----- <br>-/-- | 1,6-8, 13-15 | TECHNICAL FIELDS SEARCHED (IPC)<br><br>H04L |

The present search report has been drawn up for all claims

| Place of search | Date of completion of the search | Examiner |
|---|---|---|
| The Hague | 19 January 2007 | Papantoniou, Antonis |

**European Patent Office**

**EUROPEAN SEARCH REPORT**

Application Number

EP 06 25 0616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/082356 A1 (WALTON J RODNEY [US] ET AL) 29 April 2004 (2004-04-29) <br> * page 1, left-hand column, paragraph 8 * <br> * page 3, left-hand column, paragraph 53 * | 6,13-15 | |
| A | * page 15, right-hand column, paragraph 187 * <br> * page 23, left-hand column, paragraph 272 - paragraph 281 * <br> * page 33, right-hand column, paragraph 439 - page 34, right-hand column, paragraph 452 * <br> ----- | 1,7 | |
| | | | TECHNICAL FIELDS SEARCHED (IPC) |

The present search report has been drawn up for all claims

| Place of search | Date of completion of the search | Examiner |
|---|---|---|
| The Hague | 19 January 2007 | Papantoniou, Antonis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 0616

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2007

| Patent document cited in search report | | Publication date | Patent family member(s) | | Publication date |
|---|---|---|---|---|---|
| US 2004203456 | A1 | 14-10-2004 | NONE | | |
| WO 03101029 | A | 04-12-2003 | AU | 2003233830 A1 | 12-12-2003 |
| | | | BR | 0311427 A | 22-03-2005 |
| | | | CN | 1663163 A | 31-08-2005 |
| | | | EP | 1508218 A1 | 23-02-2005 |
| | | | JP | 2005528038 T | 15-09-2005 |
| | | | MX | PA04011949 A | 31-03-2005 |
| | | | US | 2005255805 A1 | 17-11-2005 |
| | | | ZA | 200409619 A | 02-08-2005 |
| US 2004082356 | A1 | 29-04-2004 | AU | 2003287291 A1 | 13-05-2004 |
| | | | BR | 0315677 A | 06-09-2005 |
| | | | CA | 2500355 A1 | 06-05-2004 |
| | | | EP | 1582032 A2 | 05-10-2005 |
| | | | JP | 2006504335 T | 02-02-2006 |
| | | | KR | 20050053787 A | 08-06-2005 |
| | | | MX | PA05004394 A | 26-07-2005 |
| | | | WO | 2004039011 A2 | 06-05-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005308887 A
- JP 2004112098 A
- JP 2004166038 A
- JP 2004304760 A